# EUROPEAN PATENT APPLICATION

(11) **EP 2 551 420 A1**
(43) Date of publication of application: **30.01.2013**
(21) Application number: 11759558.7
(22) Date of filing: 25.03.2011
(51) Int. Cl.: E04D 13/18, H01L 31/042

(54) **STRUCTURE MOUNT, METHOD OF CONSTRUCTING SAID MOUNT, AND SOLAR PHOTOVOLTAIC POWER GENERATION SYSTEM USING SAID MOUNT**

(30) Priority: 29.11.2010 JP 2010265272; 25.03.2010 JP 2010070807
(71) Applicant: Sharp Kabushiki Kaisha, Osaka-shi, Osaka 545-8522 (JP)
(72) Inventor: SAGAYAMA, Kenichi, Osaka 545-8522 (JP)
(74) Representative: Müller - Hoffmann & Partner
(86) International application number: PCT/JP2011/057303
(87) International publication number: WO 2011/118754

(57) **Abstract**

The present invention provides a structural object mount that supports a structural object, including: a cross-piece (14) for mounting a structural object; a strut (11) that is connected to the cross-piece (14) and supports the cross-piece (14); two arms (12, 13) whose respective one end portions are connected to the cross-piece (14); and an arm bracket (51) that couples another end portions of the two arms (12, 13) to each other; wherein a location of connection between the cross-piece (14) and the strut (11) is between locations of connection between the cross-piece (14) and the two arms (12, 13), and the arm bracket (51) is structured to surround the perimeter of the strut (11).

## Description

### Technical Field

The present invention relates to a structural object mount for supporting a structural object such as a solar cell module, a method for installing the mount, a solar photovoltaic system using the mount.

### Background Art

Examples of structural object mounts of this kind include those constructed on concrete foundations laid on the ground or the like, and those constructed on struts driven into the ground or the like.

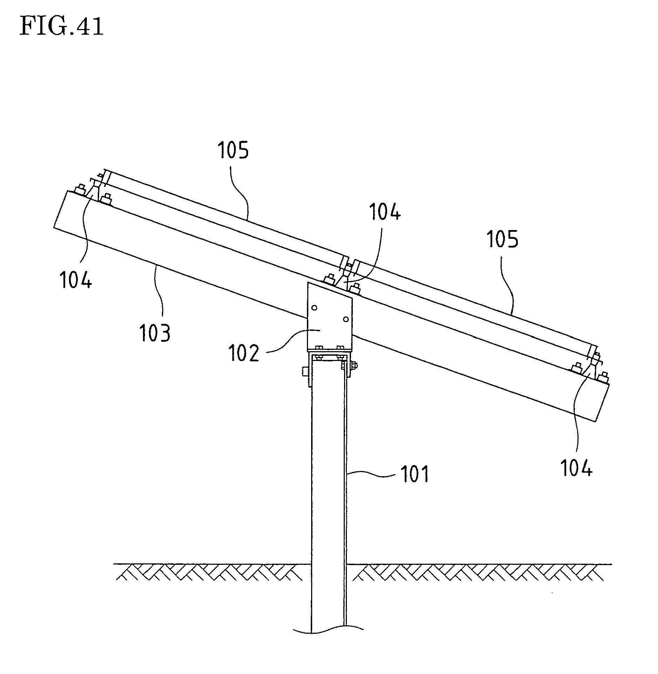

In the latter mounts, for example, as shown in FIG. 41, a strut 101 is driven into the ground in a protruding manner, a bracket 102 is fixed to an upper end portion of the strut 101, and a vertical cross-piece 103 is supported at an angle by the bracket 102. Then, using a plurality of such supporting structures, a plurality of vertical cross-pieces 103 are arranged side by side with an interval therebetween, and a plurality of horizontal cross-pieces 104 that are orthogonal to the vertical cross-pieces 103 are disposed parallel and fixed on the vertical cross-pieces 103. A plurality of solar cell modules 105 are arranged and supported, spanning between the horizontal cross-pieces 104, (excerpts from the product description of Schletter GmbH). In this case, it is preferable to provide a load balance by connecting the upper end portion of the strut 101 to the center of the vertical cross-pieces 103 and spread the load acting on the vertical cross-piece 103 to opposite sides of the upper end portion of the strut 101.

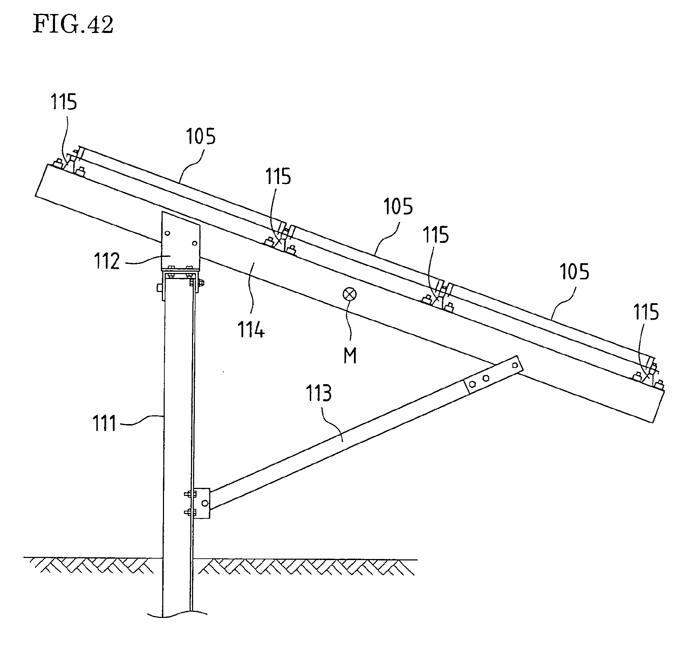

Alternatively, as shown in FIG. 42, a strut 111 is driven into the ground in a protruding manner, a bracket 112 is fixed to an upper end portion of the strut 111, an arm 113 is connected to a body portion of the strut 111, and a vertical cross-piece 114 is supported, spanning between the bracket 112 and a front end portion of the arm 113. Then, using a plurality of such supporting structures, a plurality of vertical cross-pieces 114 are arranged side by side with an interval therebetween, a plurality of horizontal cross-pieces 115 that are orthogonal to the vertical cross-pieces 114 are arranged parallel and fixed on the vertical cross-pieces 114, and a plurality of solar cell modules 105 are arranged and supported, spanning between the horizontal cross-pieces 115 (excerpts from the product description of Schletter GmbH).

### Summary of Invention

### Problems to be Solved by the Invention

However, with a mount as shown in FIG. 41, only one location in the vicinity of the center of the vertical cross-piece 103 is fixed by the bracket 102 located at the upper end portion of the strut 101. Accordingly, if a wind pressure acts on the solar cell module 105, a moment acting to rotate the solar cell module 105 about the bracket 102 is generated, and a force resulting from this moment is concentrated on the bracket 102, posing a problem in that the bracket 102 may be damaged.

With a mount as shown in FIG. 42, the vertical cross-piece 114 is supported, spanning between the bracket 112 located at the upper end portion of the strut 111 and the front end portion of the arm 113. Accordingly, the solar cell module 105 does not rotate easily even if a wind pressure acts on the solar cell module 105, and a force resulting from the wind pressure is received by the bracket 112 and the front end portion of the arm 113 in a dispersed manner, resulting in high durability against wind pressure.

However, as shown in FIG. 42, the load center M of the solar cell modules 105 is displaced from the strut 111, and therefore, a force acting to cause the strut 111 to collapse acts constantly on the strut 111, resulting in the problem regarding the stability of the strut 111. In particular, when the load of a plurality of solar cell modules is applied to a single strut 111, there is concern as to how to support the solar cell modules in a stable manner for a long period.

Furthermore, for both of the structures of FIGS. 41 and 42, it is necessary to perform the operation of placing the vertical cross-piece on the upper end portion of the strut located high and fixing the vertical cross-piece to the upper end portion of the strut located high, while making the vertical cross-piece inclined, which leads to a poor operation efficiency.

Therefore, the present invention has been achieved in view of the above-described conventional problems, and it is an object of the invention to provide a structural object mount that has sufficient strength and excellent stability and for which installation operation is easy, a method for installing the mount, and a solar photovoltaic system using the mount.

### Means for Solving the Problems

In order to solve the above-described problems, a structural object mount of the present invention is a structural object mount that supports a structural object, including: a cross-piece for mounting a structural object; a strut that is connected to the cross-piece and supports the cross-piece; two arms whose respective one end portions are connected to the cross-piece; and an arm bracket that couples another end portions of the two arms to each other, wherein the structural object mount has a structure in which a location of connection between the cross-piece and the strut is between locations of connection between the cross-piece and the two arms, and the arm bracket surrounds the perimeter of the strut.

This structural object mount of the present invention has a structure in which end portions of two arms are connected to two locations of a cross-piece, the cross-piece is connected to a strut between the two locations, and another end portions of the arms are coupled to each other with an arm bracket that surrounds the perimeter of the strut disposed therebetween. Accordingly, the structural object mount can be roughly assembled by performing the operation of previously connecting end portions of the two arms to two locations of the cross-piece, connecting the cross-piece to the strut, thereafter causing another end portions of the arms to approach toward the strut, and coupling the other end portions of the arms to each other with the arm bracket disposed therebetween, and therefore the operation of installing the structural object mount can be performed easily.

Since the two arms, the cross-piece, and the strut construct a truss, the structural object mount has high strength. Furthermore, the location of connection of the upper end portion of the strut to the cross-piece is between the locations of connection of the arms, and therefore the structural object on the cross-piece can be supported in a stable manner.

A structural object mount of the present invention may be a structural object mount that supports a structural object, including: a strut; and a triangular structural unit in which end portions of two arms are respectively connected to two locations of a cross-piece for mounting a structural object and another end portions of the arms are coupled to each other, wherein an opening portion that allows passage of the strut is formed between the other end portions of the arms, and the strut is passed through the opening portion, and an upper end portion of the strut is coupled to a location approximately midway between the two locations of the cross-piece.

With this structural object mount of the present invention, end portions of two arms are connected to two locations of a cross-piece, and another end portions of the arms are coupled to each other to form a triangular structural unit including the arms and the cross-piece. In addition, an opening portion that allows passage of the strut is formed between the other end portions of the arms. Accordingly, the structural object mount can be roughly assembled by performing the operation of forming the structural unit, and thereafter passing the strut through the opening portion located between the other end portions of the arms. Furthermore, the structural unit is supported by the strut in a stable manner in a state in which the upper end portion of the strut is moved to the cross-piece through the opening portion, and therefore the operation of connecting the upper end portion of the strut to the cross-piece is facilitated. That is, the operation of installing the structural object mount can be performed easily.

Since the two arms, the cross-piece, and the strut construct a truss, the structural object mount has high strength. Furthermore, the location of connection of the upper end portion of the strut to the cross-piece is between the locations of connection of the arms, and therefore the structural object on the cross-piece can be supported in a stable manner.

In the structural object mount of the present invention, a play may be provided between the opening portion and the strut.

Accordingly, it is possible to perform the operation of moving the upper end portion of the strut to the cross-piece through the opening portion in a reliable and easy manner.

Furthermore, in the structural object mount of the present invention, an inner face of the opening portion and an outer face of the strut may be engaged with each other to prevent rotation of the triangular structural unit.

For example, when the internal shape of the opening portion is rectangular and the cross-sectional shape of the strut is an H-shape, the inner face of the opening portion and the outer face of the strut are engaged with each other to prevent rotation of the triangular structural unit, and thereby the direction of the cross-piece is determined.

In the structural object mount of the present invention, an arm bracket may be provided that is interposed between the other end portions of the arms and connects the other end portions of the arms to each other, and the opening portion may be formed in the arm bracket.

Furthermore, in the structural object mount of the present invention, the arm bracket may be fastened to a body portion of the strut.

In this case, it is possible to suppress rattling between the body portion of the strut and the arm bracket and the arms.

In the structural object mount of the present invention, the arm bracket may be disposed so as to sandwich the strut, an inner face of the arm bracket may serve as the opening portion, the arm bracket and each of the arms may be connected by fastening, and the play between the opening portion and the strut may be adjusted by changing the strength of the fastening.

In this case, it is possible to fasten the arm bracket and the arms, while at the same time fixing the triangular structural unit to the strut without a play between the opening portion and the strut.

Furthermore, in the structural object mount of the present invention, an upper end portion of the strut may be connected to the cross-piece at the center of the structural object mounted onto the cross-piece.

In this case, the load of the structural object hardly acts so as to cause the strut to collapse, which further increases the stability of the structural object mount.

In the structural object mount of the present invention, a vertically extending elongated hole may be formed in an upper end portion of the strut, and the cross-piece may be fastened through the elongated hole located at the upper end portion of the strut.

In this case, it is possible to move the cross-piece vertically along the elongated hole to align the vertical position of the cross-piece.

Furthermore, in the structural object mount of the present invention, a horizontally extending elongated hole may be formed in each of two locations of the cross-piece where the end portions of the arms are connected and a location approximately midway of the cross-piece where an upper end portion of the strut is coupled, and the end portions of the arms and the upper end portion of the strut are fastened or coupled through the elongated holes of the cross-piece.

In this case, it is possible to move the cross-piece horizontally along the elongated hole to align the horizontal position of the cross-piece.

Furthermore, in the structural object mount of the present invention, the structural object may be a solar cell module.

Thereby, a solar photovoltaic system is constructed.

Next, an installation method of the present invention is a method for installing the above-described structural object mount of the present invention, including the steps of: providing the strut in a protruding manner; connecting end portions of the arms to two locations of the cross-piece, and dividing the arm bracket so as to be connected to another end portions of the arms; placing the cross-piece on an upper end portion of the strut; and connecting, to the strut, the arm bracket connected to the other end portions of the arms to surround the perimeter of the strut by the arm bracket, and coupling the other end portions of the arms to each other with the arm bracket disposed therebetween.

With this installation method of the present invention, the structural object mount can be roughly assembled by performing the operation of previously connecting end portions of two arms to two locations of a cross-piece, placing the cross-piece on an upper end portion of a strut, thereafter causing another end portions of the arms to approach toward the strut, connecting the arm bracket to the strut to surround the perimeter of the strut by the arm bracket, and coupling the other end portions of the arms to each other with the arm bracket disposed therebetween, and therefore the operation of installing the structural object mount can be performed easily.

An installation method of the present invention is a method for installing the above-described structural object mount of the present invention, including the steps of: providing the strut in a protruding manner; connecting end portions of the arms to two locations of the cross-piece and coupling another end portions of the arms to each other to form a triangular structural unit including the arms and the cross-piece; and passing the strut through an opening portion formed between the other end portions of the arms of the structural unit to connect the upper end portion of the strut to a location midway between the two locations of the cross-piece.

With this installation method of the present invention, a strut is provided in a protruding manner, a triangular structural unit including arms and a cross-piece is formed, and thereafter the strut is passed through an opening portion located between the end portions of the arms, and therefore the structural object mount can be easily assembled even when the strut is located high. Furthermore, the structural unit is supported by the strut in a stable manner in a state in which the upper end portion of the strut is moved to the cross-piece through the opening portion, and therefore the operation of fixing the upper end portion of the strut to the cross-piece is facilitated. That is, the operation of installing the structural object mount can be performed easily.

The installation method of the present invention may include: arranging a plurality of the struts and providing the struts on the ground in a protruding manner; loading a plurality of the structural units onto a truck; and, during a process in which the truck is caused to run, is stopped at the positions of the struts successively, and the structural units are unloaded from the truck, passing the strut through an opening portion formed between the end portions of the arms of the structural unit, moving the upper end portion of the strut to the cross-piece to connect the upper end portion of the strut to the cross-piece.

In this case, the operation of passing the strut through the opening portion located between end portions of the arms is performed mainly on the truck, and therefore the triangular structural unit does not need to be lifted above the upper end portion of the strut, or the effort to lift up the structural unit is reduced, which further facilitates the operation. Furthermore, the operation efficiency can be increased by causing the truck to run, stopping the truck at the positions of the struts successively, and mounting the structural unit to the strut on each of these occasions.

Next, a solar photovoltaic system of the present invention is a solar photovoltaic system using the above-described structural object mount of the present invention, wherein a plurality of sets of structural object mounts each including the strut, the cross-piece, and the two arms are provided, and the cross-pieces of the structural object mounts are arranged side by side with an interval therebetween, assuming that the cross-pieces serve as vertical cross-pieces, a plurality of horizontal cross-pieces orthogonal to the vertical cross-pieces are arranged parallel on the vertical cross-pieces, and a plurality of solar cell modules are supported between the horizontal cross-pieces, spanning therebetween.

Since this solar photovoltaic system of the present invention uses the above-described structural object mount of the present invention, the installation operation thereof can be performed easily and the system can support solar cell modules with sufficient strength in a stable manner.

### Effects of the Invention

According to the present invention, end portions of two arms are connected to two locations of a cross-piece, the cross-piece is connected to a strut between the two locations, and another end portions of the arms are coupled to each other with an arm bracket that surrounds the perimeter of the strut disposed therebetween. Accordingly, the structural object mount can be roughly assembled by performing the operation of previously connecting end portions of the two arms to two locations of the cross-piece, connecting the cross-piece to the strut, thereafter causing another end portions of the arms to approach toward the strut, and coupling the other end portions of the arms to each other with the arm bracket disposed therebetween, and therefore the operation of installing the structural object mount can be performed easily.

According to the present invention, end portions of two arms are connected to two locations of a cross-piece, and another end portions of the arms are coupled to each other to form a triangular structural unit including the arms and the cross-piece. In addition, an opening portion that allows passage of the strut is formed between the other end portions of the arms. Accordingly, the structural object mount can be roughly assembled by performing the operation of forming the structural unit, and thereafter passing the strut through the opening portion located between the other end portions of the arms. Furthermore, the structural unit is supported by the strut in a stable manner in a state in which the upper end portion of the strut is moved to the cross-piece through the opening portion, and therefore the operation of connecting the upper end portion of the strut to the cross-piece is facilitated.

Since the two arms, the cross-piece, and the strut construct a truss, the structural object mount has high strength. Furthermore, the location of connection of the upper end portion of the strut to the cross-piece is between the locations of connection of the arms, and therefore the structural object on the cross-piece can be supported in a stable manner.

### Brief Description of Drawings

[FIG. 1] FIG. 1 is a perspective view showing a solar photovoltaic system that supports a plurality of solar cell modules using a first embodiment of a structural object mount of the present invention.
[FIG. 2] FIG. 2 is a perspective view showing a solar cell module.
[FIG. 3] FIG. 3 is an enlarged perspective view showing the vicinity of an end of a tension bar of the solar cell module.
[FIGS. 4] FIGS. 4(a) and 4(b) are an enlarged front view and an enlarged side view showing the end of the tension bar.
[FIG. 5] FIG. 5 is a perspective view showing a strut of the structural object mount of FIG. 1.
[FIGS. 6] FIGS. 6(a) and 6(b) are perspective views showing two arms having different lengths of the structural object mount of FIG. 1.
[FIG. 7] FIG. 7 is a cross-sectional view showing the arm of FIG. 6.
[FIGS. 8] FIGS. 8(a) and 8(b) are a perspective view and a side view showing a vertical cross-piece of the structural object mount of FIG. 1.
[FIG. 9] FIG. 9 is a perspective view showing a cross-piece bracket of the structural object mount of FIG. 1.
[FIGS. 10] FIGS. 10(a) and 10(b) are a front view and a side view showing the cross-piece bracket of FIGS. 9.
[FIG. 11] FIG. 11 is a perspective view showing an arm bracket of the structural object mount of FIG. 1.
[FIG. 12] FIG. 12 is a plan view showing the arm bracket of FIG. 11.
[FIGS. 13] FIGS. 13(a) and 13(b) are a perspective view and a plan view showing a cross-piece member constituting a component of a horizontal cross-piece of the structural object mount of FIG. 1.
[FIG. 14] FIG. 14 is a perspective view showing another cross-piece member constituting a component of a horizontal cross-piece of the structural object mount of FIG. 1.
[FIG. 15] FIG. 15 is a perspective view showing a triangular structural unit made up of a vertical cross-piece, two arms, and so forth.
[FIG. 16] FIG. 16 is a side view showing the structural unit of FIG. 15.
[FIG. 17] FIG. 17 is an enlarged side view showing the vicinity of the cross-piece bracket of the structural unit of FIG. 15.
[FIG. 18] FIG. 18 is a front view showing a connection structure between the vertical cross-piece and the arm of the structural unit of FIG. 15.
[FIG. 19] FIG. 19 is a plan view showing a connection structure between the arms and the arm brackets of the structural unit of FIG. 15.
[FIG. 20] FIG. 20 is a cross-sectional view showing a state in which the strut is inserted into opening portions of the arm brackets of FIG. 19.
[FIG. 21] FIG. 21 is a perspective view showing a state in which the strut is being inserted into an opening portion of the structural unit of FIG. 15.
[FIG. 22] FIG. 22 is a perspective view showing a state in which the strut has been inserted into the opening portion of the structural unit of FIG. 15.
[FIG. 23] FIG. 23 is a perspective view showing a mounting fitting used for connecting and fixing the horizontal cross-piece to the vertical cross-piece.
[FIG. 24] FIG. 24 is a perspective view showing a state in which the mounting fitting of FIG. 23 is mounted to the vertical cross-piece.
[FIG. 25] FIG. 25 is a cross-sectional view showing a state in which the horizontal cross-piece is connected to the vertical cross-piece.
[FIG. 26] FIG. 26 is a perspective view showing a connection structure between the cross-piece members.
[FIG. 27] FIG. 27 is a perspective view showing a guiding support member of the structural object mount of FIG. 1.
[FIG. 28] FIG. 28 is a perspective view showing a mounting fitting used for fixing the guiding support member to the horizontal cross-piece.
[FIG. 29] FIG. 29 is a perspective view showing a state in which the mounting fitting of FIG. 28 is mounted to the horizontal cross-piece.
[FIG. 30] FIG. 30 is a perspective view showing a fixing structure for the guiding support member using the mounting fitting.
[FIG. 31] FIG. 31 is a cross-sectional view showing the fixing structure of FIG. 30.
[FIG. 32] FIG. 32 is an exploded perspective view showing a fixing structure for the guiding support member using the mounting fitting.
[FIG. 33] FIG. 33 is a perspective view showing a main structure of the structural object mount according to the first embodiment.
[FIG. 34] FIG. 34 is a perspective view showing an operation procedure for mounting solar cell modules to the structural object mount of FIG. 33.
[FIG. 35] FIG. 35 is a partial enlarged view of FIG. 34.
[FIG. 36] FIG. 36 is a perspective view showing the periphery of the guiding support member that supports the last solar cell module of the structural object mount of FIG. 33.
[FIG. 37] FIG. 37 is a side view showing a solar photovoltaic system that supports a plurality of solar cell modules using a structural object mount according to a second embodiment.
[FIG. 38] FIG. 38 is a perspective view showing a cross-piece bracket of the structural object mount of FIG. 37.
[FIG. 39] FIG. 39 is a perspective view showing a connection structure between arm brackets of the structural object mount of FIG. 37 that are used in a pair.
[FIG. 40] FIG. 40 is a side view showing the connection structure between the cross-piece brackets of the structural object mount of FIG. 37.
[FIG. 41] FIG. 41 is a side view showing a conventional solar cell module mount.
[FIG. 42] FIG. 42 is a side view showing another conventional solar cell module mount.
[FIG. 43] FIG. 43 is a side view showing a solar photovoltaic system that supports a plurality of solar cell modules using a structural object mount according to a third embodiment of the present invention.
[FIG. 44] FIG. 44 is a perspective view showing the structural object mount of FIG. 43.
[FIG. 45A] FIG. 45A is a perspective view showing a first bracket of the arm bracket of the structural object mount of FIG. 43.
[FIG. 45B] FIG. 45B is a perspective view showing a second bracket of the arm bracket of the structural object mount of FIG. 43.
[FIG. 46] FIG. 46 is a side view showing a step included in a method for installing the structural object mount of FIG. 43.
[FIG. 47] FIG. 47 is a plan view showing the first and second brackets of FIGS. 45A and 45B that are combined together.

### Modes for Carrying out the Invention

Hereinafter, embodiments of the present invention will be described in detail with reference to the accompanying drawings.

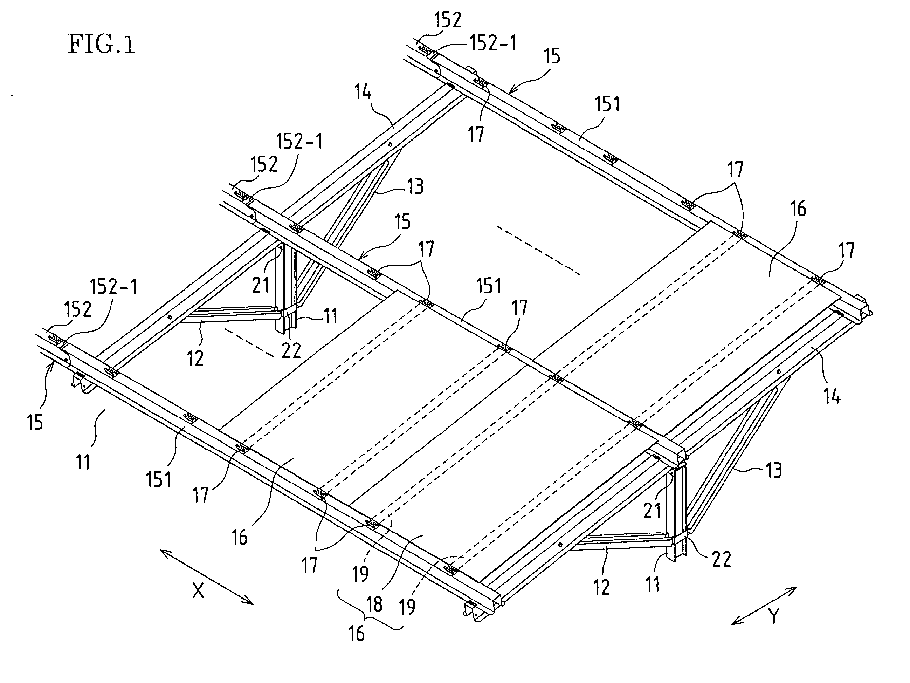

FIG. 1 is a perspective view showing a solar photovoltaic system that supports a plurality of solar cell modules using a structural object mount according to a first embodiment of the present invention.

This solar photovoltaic system is intended for use as a power plant, and includes many solar cell modules.

As shown in FIG. 1, in the solar photovoltaic system, a plurality of struts 11 are driven into the ground with an interval therebetween so as to be provided in a protruding manner. Vertical cross-pieces 14 are connected to upper end portions of the respective corresponding struts 11 at an angle, and two arms 12, 13 are disposed between a body portion of each of the struts 11 and the corresponding vertical cross-piece 14, so that the vertical cross-pieces 14 are supported on the upper end portions of the respective corresponding struts 11. Also, the vertical cross-pieces 14 are disposed parallel with an interval therebetween, and three horizontal cross-pieces 15 are disposed so as to be orthogonal to the vertical cross-pieces 14, so that the horizontal cross-pieces 15 are arranged side by side on the vertical cross-pieces 14. A plurality of solar cell modules 16 are disposed at an angle between the horizontal cross-pieces 15, spanning therebetween, and opposite ends of the solar cell modules 16 are fixed and supported by a plurality of guiding support members 17 that are fixed with an interval on the horizontal cross-pieces 15.

A cross-piece bracket 21 is interposed between the upper end portion of the strut 11 and the vertical cross-piece 14, and the upper end portion of the strut 11 and the vertical cross-piece 14 are coupled by the cross-piece bracket 21.

A set of two arm brackets 22 are interposed between end portions of the two arms 12, 13 extending to the body portion of the strut 11. The end portions of the arms 12, 13 are coupled by the arm brackets 22, and the body portion of the strut 11 is inserted between the arm brackets 22.

In a solar photovoltaic system having this configuration, a plurality of solar cell modules 16 are mounted in a row sideways between the lower horizontal cross-piece 15 and the middle horizontal cross-piece 15. Likewise, a plurality of solar cell modules 16 are mounted in a row sideways between the middle horizontal cross-piece 15 and the upper horizontal cross-piece 15. Therefore, two rows of the plurality of solar cell modules 16 are arranged on the three horizontal cross-pieces 15. Also, four or six solar cell modules 16 are provided between any two vertical cross-pieces 14 that are adjacent to each other in the left-right direction.

Note that, in FIG. 1, a direction in which the struts 11 are arranged is referred to as an X direction (a left-right direction), and a direction orthogonal to the X direction is referred to as a Y direction (a front-back direction).

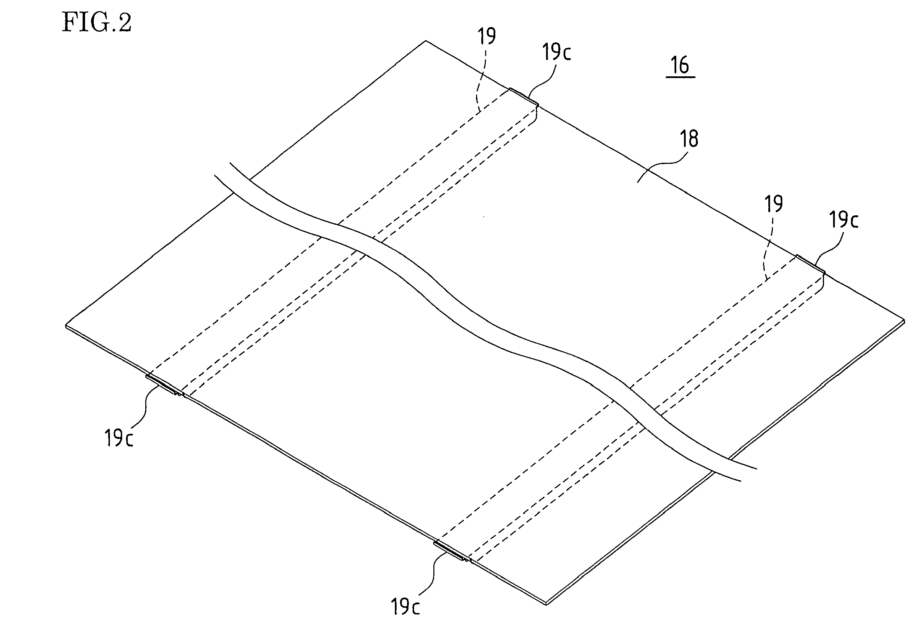

FIG. 2 is a perspective view showing the solar cell module 16. As shown in FIG. 2, the solar cell module 16 includes a solar cell panel 18 and two tension bars 19 that are disposed parallel to each other and fixed to the underside of the solar cell panel 18. The solar cell panel 18 is formed, for example, by interposing a semiconductor layer that photoelectrically converts sunlight between two glass plates. Alternatively, it may be formed by interposing the semiconductor layer between a single glass plate and a protective layer. The tension bars 19 are attached and fixed to the underside of the solar cell panel 18 with an adhesive or the like. Each tension bar 19 is provided parallel to one edge of the solar cell panel 18 and spaced apart from that edge. In addition, the tension bars 19 are formed by cutting and folding a steel plate. Alternatively, the tension bars 19 may be formed by extruding an aluminum material.

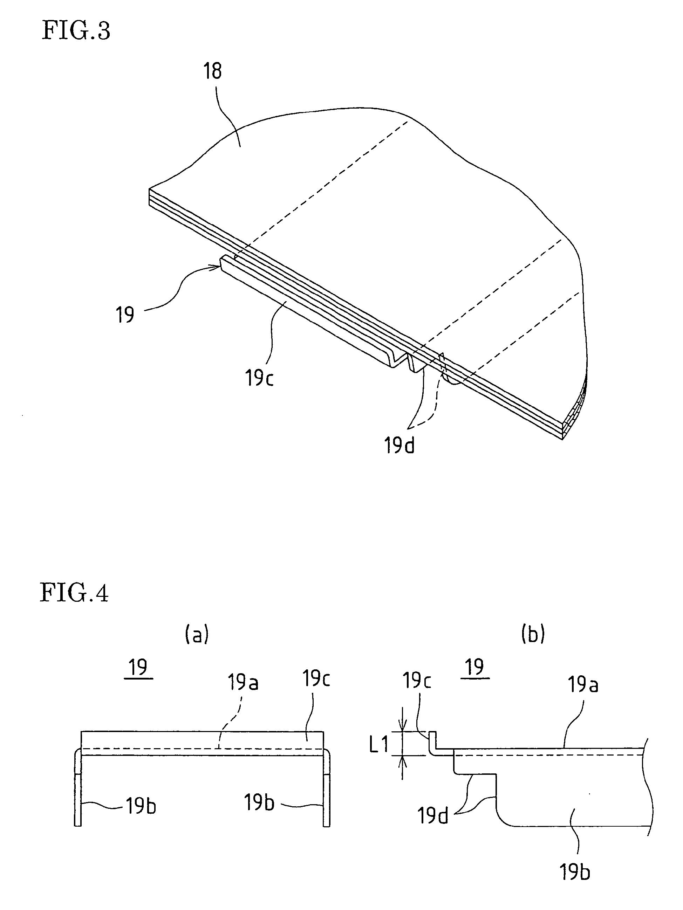

FIG. 3 is an enlarged perspective view showing the vicinity of an end of the tension bar 19 of the solar cell module 16. FIGS. 4(a) and 4(b) are an enlarged front view and an enlarged side view showing the end of the tension bar 19.

As shown in FIGS. 3, 4(a), and 4(b), the tension bar 19 includes a elongated main plate 19a, side plates 19b bent downward on right and left opposite sides of the main plate 19a, and fitting portions 19c bent upward at front and back opposite ends of the main plate 19a. Also, the opposite ends of each of the side plates 19b are partly cut into a rectangular shape, thus forming abutting portions 19d. Furthermore, the fitting portions 19c at the opposite ends of each tension bar 19 protrude beyond the corresponding end portions of the solar cell panel 18.

The structural object mount according to the first embodiment includes the struts 11, the two arms 12, 13, the vertical cross-piece 14, the horizontal cross-piece 15, and so forth shown in FIG. 1, and also uses the tension bar 19 shown in FIGS. 3, 4(a), and 4(b) as a component of the mount.

Next, a description will be given of the struts 11, the two arms 12, 13, the vertical cross-piece 14, the horizontal cross-piece 15, and so forth that constitute the structural object mount.

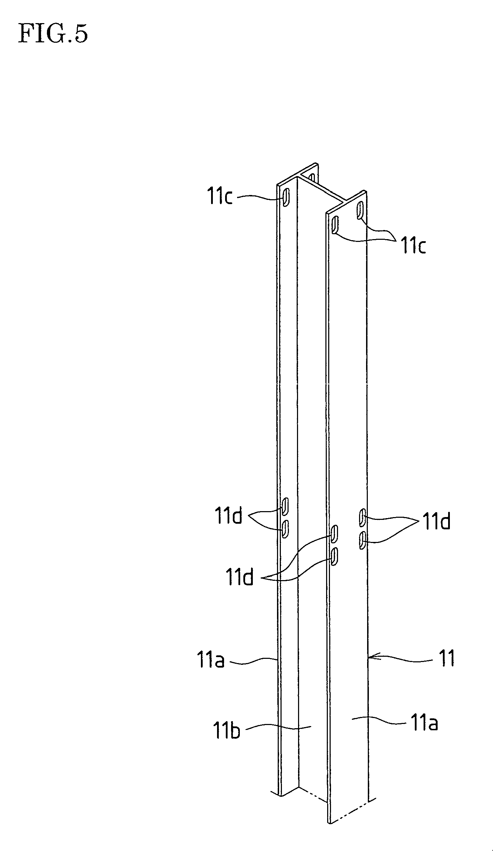

FIG. 5 is a perspective view showing the strut 11. As shown in FIG. 5, the strut 11 is a steel having an H-shaped cross-section and including a pair of flange portions 11a facing each other and a web portion 11b that connects the flange portions 11a. At the upper end portion of the strut 11, an elongated hole 11c is formed in the vicinity of each of opposite edges of each of the flange portions 11a, and, thus, a total of four elongated holes 11c are formed. At the body portion of the strut 11, two elongated holes 11c are formed, arranged end to end, in the vicinity of each of the opposite edges of each of the flange portions 11a, and, thus, a total of eight elongated holes 11d are formed. Each of the struts 11 is driven vertically into the ground and provided at substantially the same height in a protruding manner.

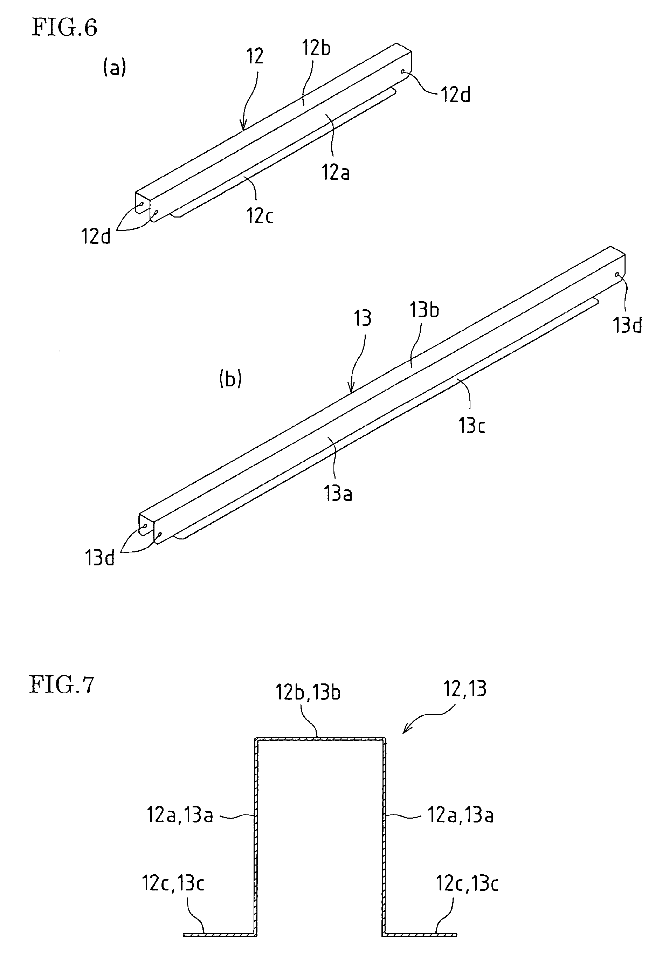

FIGS. 6(a) and 6(b) are perspective views showing the two arms 12, 13, respectively. FIG. 7 is a cross-sectional view showing the arms 12, 13. As shown in FIGS. 6(a) and 6(b), the arms 12, 13 have different lengths. The arm 12, which is connected to a location downward in the inclination of the vertical cross-piece 14 in FIG. 1, is short, and the arm 13, which is connected to a location upward in inclination of the vertical cross-piece 14, is long.

As shown in FIGS. 6(a), 6(b), and 7, the arm 12, 13 includes a main plate 12b, 13b, a pair of side plates 12a, 13a bent on opposite sides of the main plate 12b, 13b and brims 12c, 13c bent outward at one edge of the corresponding side plate 12a, 13a, and, thus, has a generally hat-shaped cross-section. Also, the brims 12c, 13c are removed at opposite end portions of the arm 12, 13, and the perforated holes 12d, 13d are formed in the corresponding side plate 12a, 13a.

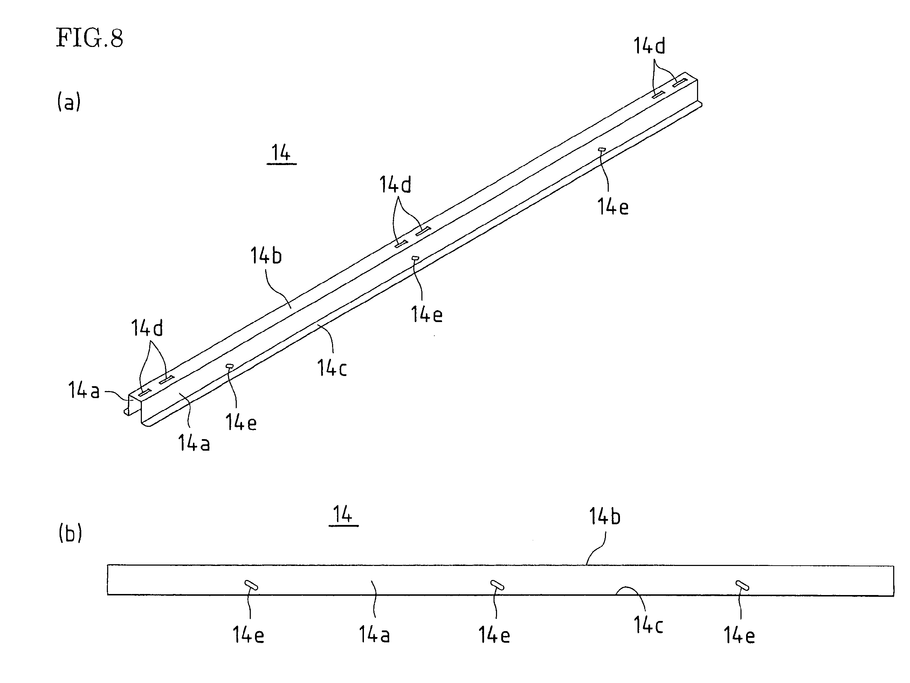

FIGS. 8(a) and 8(b) are a perspective view and a side view showing the vertical cross-piece 14. As shown in FIGS. 8(a), and 8(b), the vertical cross-piece 14 includes a main plate 14b, a pair of side plates 14a bent on opposite sides of the main plate 14b and brims 14c bent outward at one edge of the respective corresponding side plates 14a, and, thus, has a generally hat-shaped cross-section. A pair of T-shaped holes 14d are formed in the vicinity of opposite ends and at the central portion of the main plate 14b of the vertical cross-piece 14. In addition, elongated holes 14e are formed at the central portion, an area toward the front end, and an area toward the rear end portion of the respective corresponding side plates 14a, obliquely with respect to the longitudinal direction of the vertical cross-piece 14. The angle of inclination of the elongated holes 14e with respect to the longitudinal direction of the vertical cross-piece 14 is set such that the elongated holes 14e are level when the vertical cross-piece 14 is supported at an angle on the upper end portion of the strut 11.

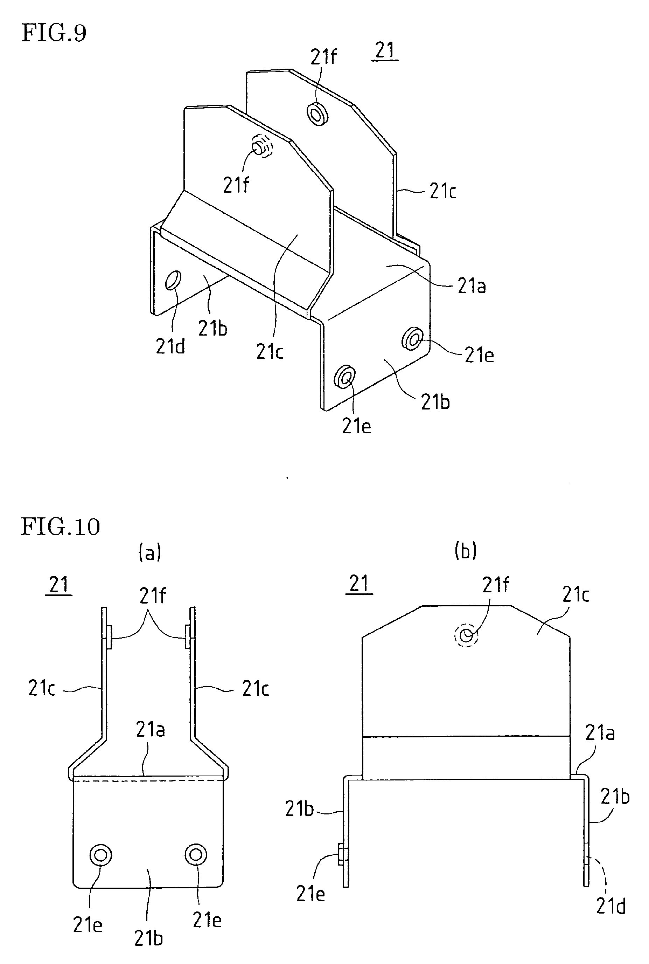

FIG. 9 is a perspective view showing the cross-piece bracket 21. FIGS. 10(a) and 10(b) are a front view and a side view showing the cross-piece bracket 21. As shown in FIGS. 9, 10(a), and 10(b), the cross-piece bracket 21 includes a main plate 21a, side plates 21b bent downward at both front and back sides of the main plate 21a, and supporting plates 21c bent upward at both right and left ends of the main plate 21a.

The interval between the inner faces of the side plates 21b are set so as to be substantially the same as the interval between the outer faces of the flange portions 11a of the strut 11, so that the upper end portion of the strut 11 (the upper end portion of each of the flange portions 11a) can be sandwiched between the inner faces of the side plates 21b. Two perforated holes 21d are formed in one of the side plates 21b at the same interval as the interval between the elongated holes 11c of the flange portions 11a of the strut 11, and two screw holes 21e are formed in the other side plate 21b at the same interval.

The supporting plates 21c are bent obliquely at both right and left ends of the main plate 21a so as to approach each other, and bent back from the middle of the supporting plates 21c so as to be parallel to each other. Consequently, the tip portions of the supporting plates 21c become parallel, and the interval between the outer faces of the tip portions of the supporting plates 21c are set so as to be substantially the same as the interval between the inner faces of the side plates 14a of the vertical cross-piece 14, making it possible to insert the tip portions of the supporting plates 21c into the inner faces of the side plates 14a of the vertical cross-piece 14. Screw holes 21f are formed at tip portions of the respective corresponding supporting plates 21c.

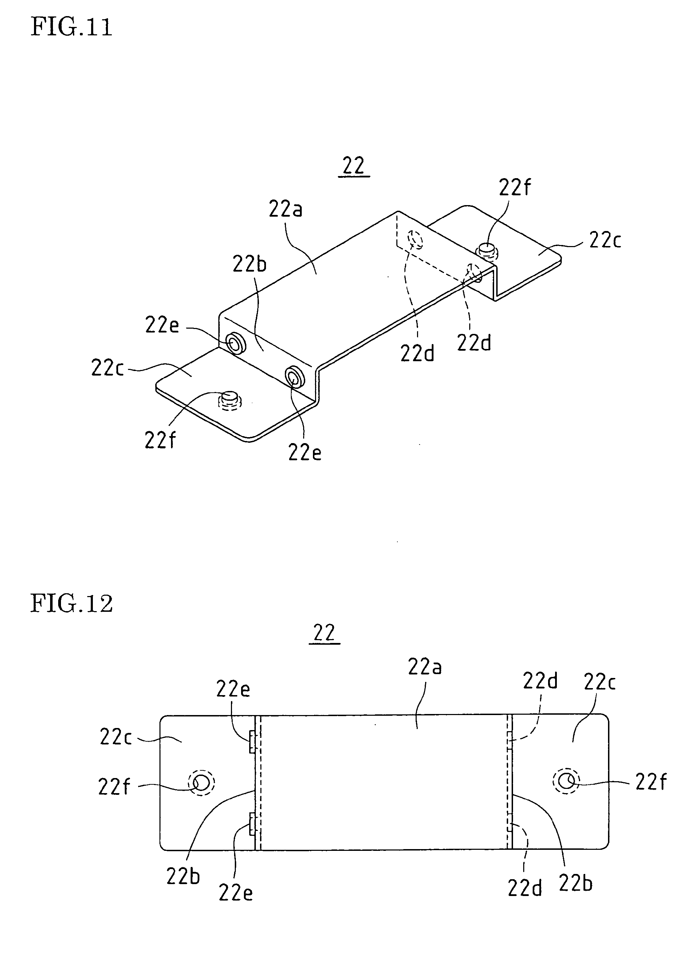

FIG. 11 is a perspective view showing the arm bracket 22. FIG. 12 is a plan view showing the arm bracket 22. As shown in FIGS. 11 and 12, the arm bracket 22 includes a main plate 22a, a pair of side plates 22b bent on opposite sides of the main plate 22a, and brims 22c bent outward at one edge of the respective corresponding side plates 22b, and, thus, has a generally hat-shaped cross-section. Two perforated holes 22d are formed in one of the side plates 22b, and two screw holes 22e are formed in the other side plate 22b at the same interval as the interval between the perforated holes 22d. In addition, screw holes 22f are formed in the respective corresponding brims 22c.

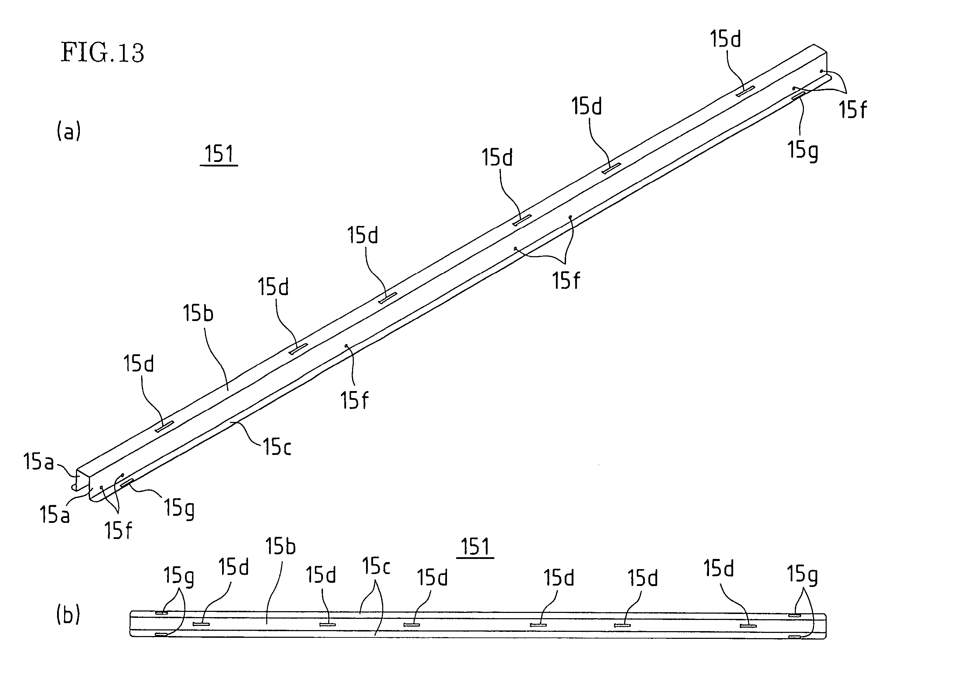

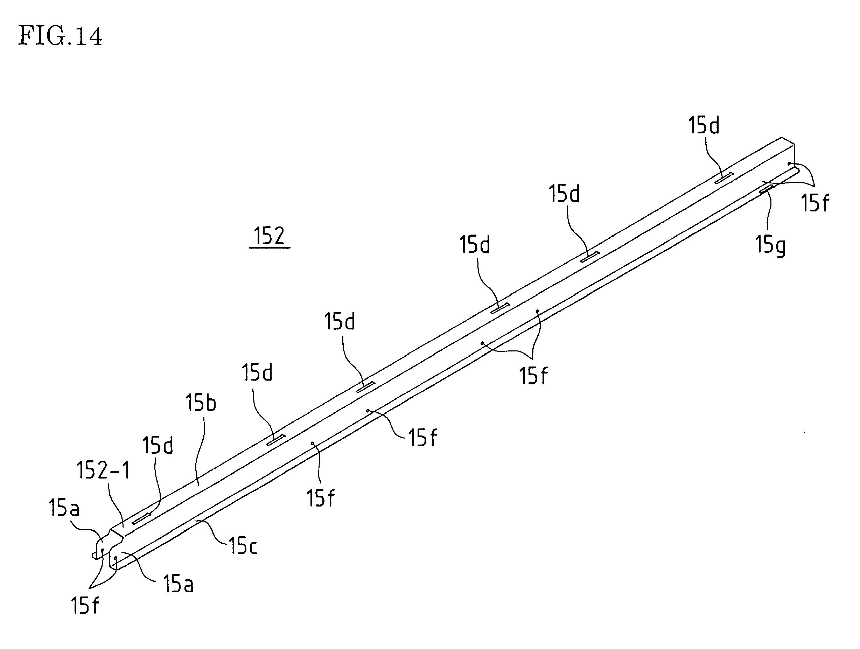

FIGS. 13(a), 13(b), and 14 show a cross-piece member constituting a component of the horizontal cross-piece 15. As shown in FIG. 1, the horizontal cross-piece 15 is very long in the X direction, and therefore, it is difficult to form the horizontal cross-piece 15 using a single member. Accordingly, the horizontal cross-piece 15 is formed by connecting a plurality of cross-piece members together.

FIGS. 13(a) and 13(b) are a perspective view and a plan view showing the first cross-piece member 151, assuming that the rightmost cross-piece member 151 of the horizontal cross-piece 15 in FIG. 1 as the first cross-piece member. As shown in FIGS. 13(a) and 13(b), the first cross-piece member 151 includes a main plate 15b, a pair of side plates 15a bent on opposite sides of the main plate 15b and brims 15c bent outward at one edge of the respective corresponding side plates 15a, and, thus, has a generally hat-shaped cross-section. T-shaped holes 15d are formed in six locations on the center line of the main plate 15b of the cross-piece member 151. In addition, perforated holes 15f are formed in a plurality of respective locations of the respective corresponding side plates 15a, and elongated holes 15g are formed in opposite end portions of the respective corresponding brims 15c.

The cross-piece member 151 is slightly longer than the interval between vertical cross-pieces 14 of FIG. 1, which allows the cross-piece member 151 to be disposed, spanning between the vertical cross-pieces 14.

FIG. 14 is a perspective view showing the second cross-piece member, or one of the subsequent cross-piece members 152 located on the left side of the first cross-piece member, assuming that the rightmost cross-piece member 151 in FIG. 1 as the first cross-piece member. As shown in FIG. 14, similar to the cross-piece member 151 of FIGS. 13(a) and 13(b), the second and subsequent cross-piece members 152 also each include a main plate 15b, a pair of side plates 15a, and brims 15c, and thus, has a hat-shaped cross-section. In addition, T-shaped holes 15d are formed in six locations on the center line of the main plate 15b. Perforated holes 15f are formed in a plurality of locations of the respective corresponding side plates 15a, and elongated holes 15g are formed in opposite end portions of the respective corresponding brims 15c.

The length of the cross-piece member 152 is substantially the same as the interval between vertical cross-pieces 14 of FIG. 1, and is slightly shorter than the cross-piece member 151.

Here, all the arms 12, 13, the vertical cross-piece 14, and the horizontal cross-piece 15 include a main plate, a pair of side plates bent on opposite sides of the main plate, and brims bent outward at one edge of the respective corresponding side plates, and, thus, have a hat-shaped cross-section. Also, all the hat-shaped cross-sections have the same size. Furthermore, all of them are formed by cutting a plated steel plate having the same thickness, making holes through the plated steel plate, and bending the plated steel plate. Accordingly, the material and the processing apparatuses can be shared, thus achieving a significant cost reduction.

Next, a description will be given of a triangular structural unit made up of the two arms 12, 13, the vertical cross-piece 14, and so forth.

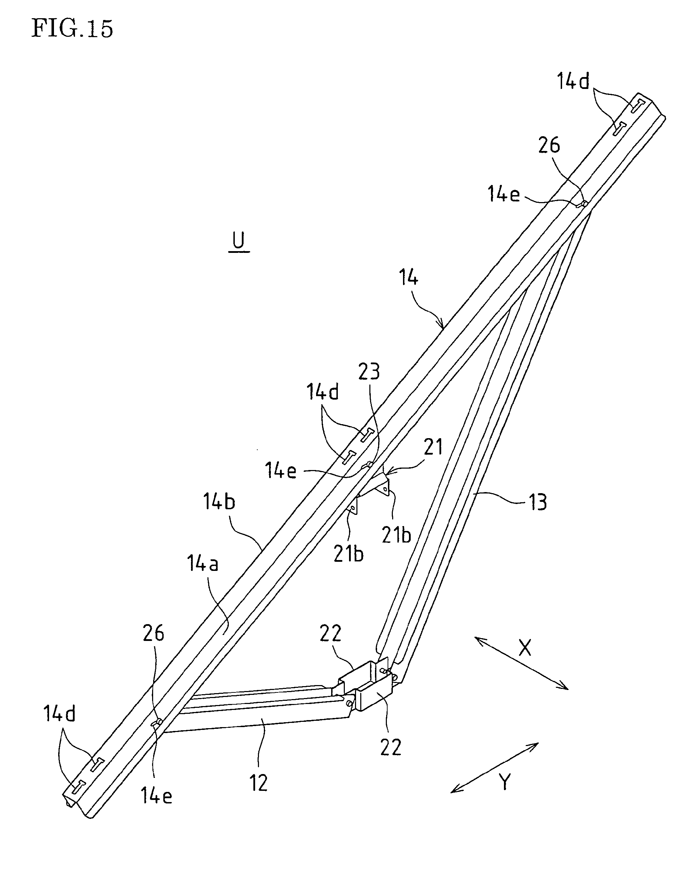

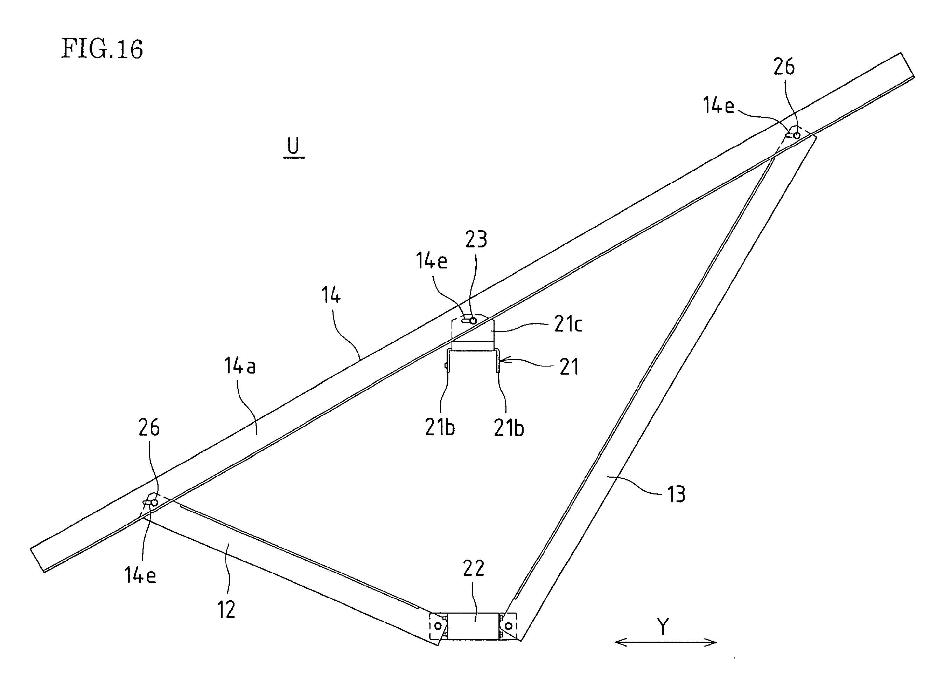

FIGS. 15 and 16 are a perspective view and a side view showing a triangular structural unit U. As shown in FIGS. 15 and 16, the structural unit U is formed by mounting the cross-piece bracket 21 to the central portion of the vertical cross-piece 14, connecting one end portion of the arm 12 to an area toward the front end of the vertical cross-piece 14, connecting one end portion of the arm 13 to an area toward the rear end of the vertical cross-piece 14, and coupling the other end portions of the arms 12, 13 with the two arm brackets 22 disposed therebetween.

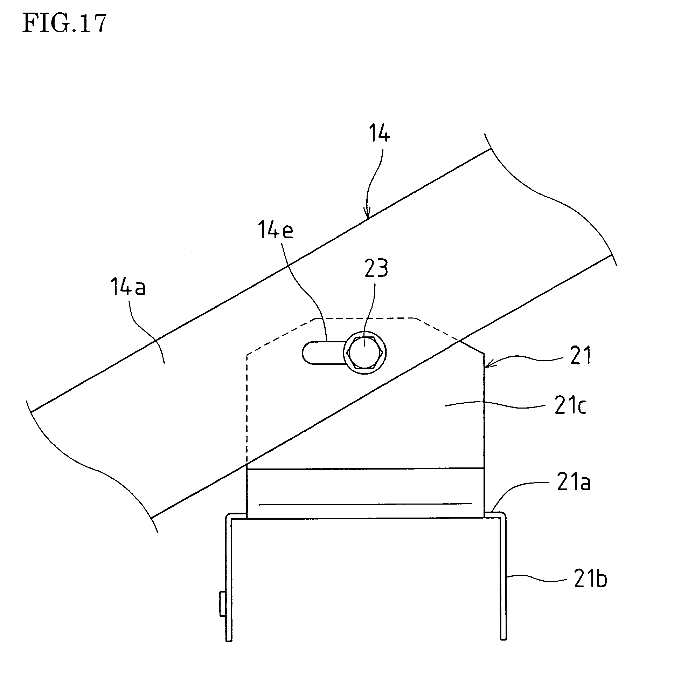

As shown in FIG. 17, at the central portion of the vertical cross-piece 14, the tip portions of the supporting plates 21c of the cross-piece bracket 21 are inserted between and overlapped with the inner faces of the side plates 14a of the vertical cross-piece 14, and two bolts 23 are screwed into the screw holes 21f of the supporting plates 21c through the elongated holes 14e of the side plates 14a, and thereby, the cross-piece bracket 21 is mounted.

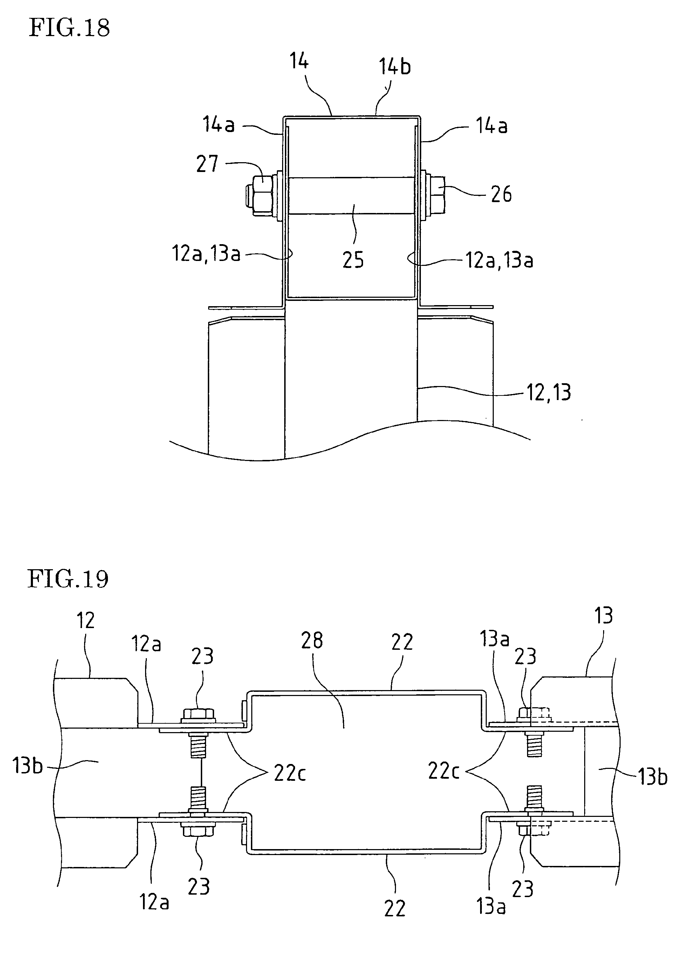

As shown in FIG. 18, in an area toward the front end of the vertical cross-piece 14, end portions of the side plates 12a of the arm 12 are inserted between the inner faces of the side plates 14a of the vertical cross-piece 14, and a pipe 25 is inserted between the side plates 12a of the arm 12. The positions of the pipe 25, the perforated holes 12d of the side plates 12a of the arm 12, and the elongated holes 14e of the side plates 14a of the vertical cross-piece 14 are aligned, and a bolt 26 is passed through the pipe 25, the perforated holes 12d of the side plates 12a of the arm 12, the elongated holes 14e of the side plates 14a of the vertical cross-piece 14, and a washer. A nut 27 is screwed and fastened to one end of the bolt 26, and, thereby, the end portions of the side plates 12a of the arm 12 are connected to the side plates 14a of the vertical cross-piece 14.

Similarly, in an area toward the back end of the vertical cross-piece 14, end portions of the side plates 13a of the arm 13 are inserted inside the side plates 14a of the vertical cross-piece 14, and the end portions of the side plates 13a of the arm 13 are connected to the side plates 14a of the vertical cross-piece 14, using a pipe 25, a bolt 26, a washer, and a nut 27.

Furthermore, as shown in FIG. 19, with the two arm brackets 22 being faced with each other, the brims 22c of one of the arm brackets 22 are overlapped with the inner face of the end portion of one of the side plates 12a, 13a of the arms 12, 13, and the two bolts 23 are screwed and fastened to the screw holes 22f of the brims 22c of one of the arm brackets 22 through the perforated holes 12d, 13d of one of the side plates 12a, 13a. Similarly, the brims 22c of the other arm bracket 22 are overlapped with the inner face of the end portion of the other of the side plates 12a, 13a of the arms 12, 13. The two bolts 23 are screwed and fastened to the screw holes 22f of the brims 22c of the other arm bracket 22 through the perforated holes 12d, 13d of the other of the side plates 12a, 13a, and, thereby, the end portions of the arms 12, 13 are coupled with the two arm brackets 22 disposed therebetween.

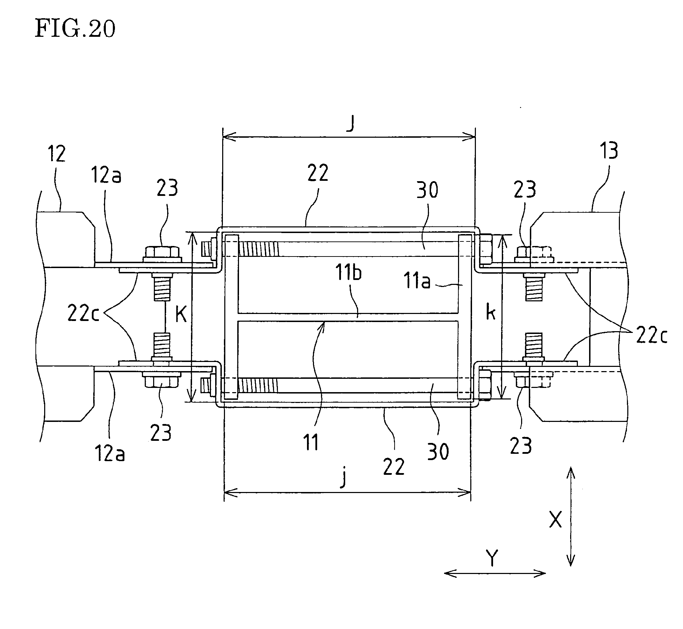

In this case, a rectangular opening portion 28 is formed inside the main plates 22a and the side plates 22b of the two arm brackets 22. Since the strut 11 is inserted into the opening portion 28, the horizontal width J and the vertical width K of the opening portion 28 are wider than the horizontal width j and the vertical width k of the cross-sectional shape of the strut 11 as shown in FIG. 20. In other words, a play is provided between the opening portion 28 and the strut 11.

The structural unit U configured in this manner is assembled before being mounted to the strut 11. For example, a plurality of structural units U are assembled at a factory, and the structural units U are shipped from the factory to the site.

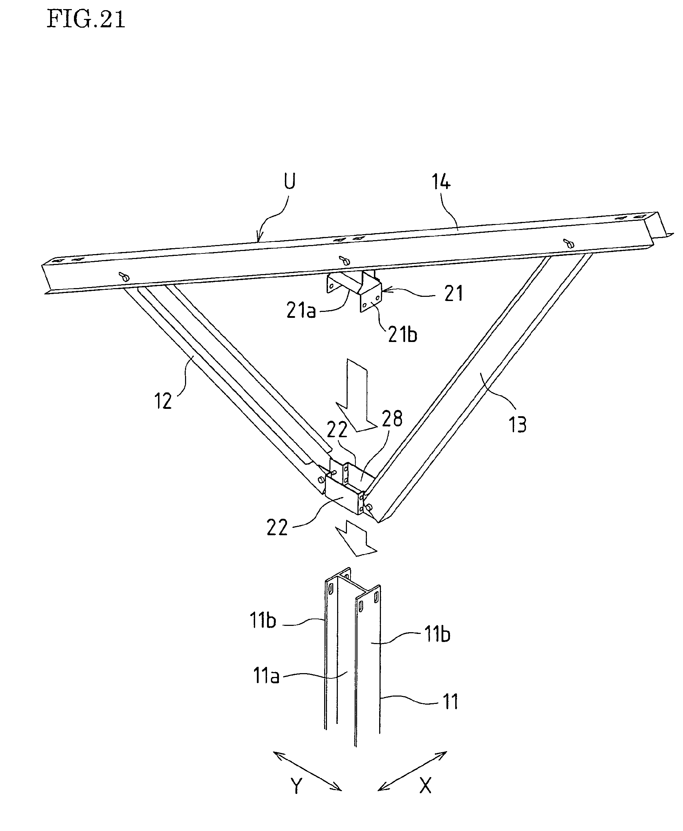

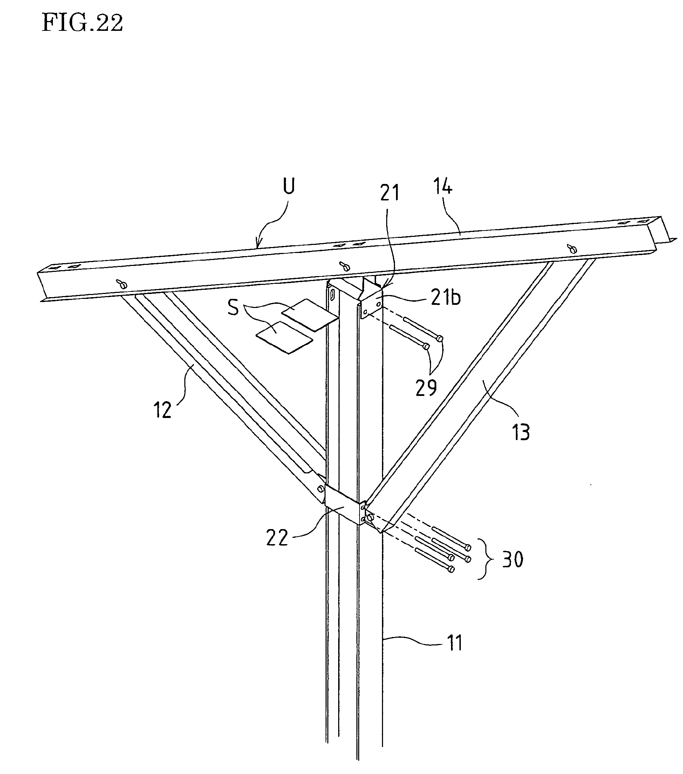

At the site, the struts 11 are provided in a protruding manner. As shown in FIGS. 21 and 22, upon arrival of the structural units U, the strut 11 is passed through the opening portion 28 inside the arm brackets 22 of the structural unit U, and an upper end portion of the strut 11 is moved to the vertical cross-piece 14. The upper end portion of the strut 11 is abutted against the main plate 21a of the cross-piece bracket 21 mounted to the central portion of the vertical cross-piece 14 and thus sandwiched between the side plates 21b.

In this case, a play is provided between the opening portion 28 and the strut 11, and therefore the strut 11 can be easily passed through the opening portion 28. Further, since the opening portion 28 is rectangular and the cross section of the strut 11 is H-shaped, the inner face of the opening portion 28 and the outer face of the strut 11 are engaged with each other to prevent rotation of the strut 11, and thereby the direction of the vertical cross-piece 14 is determined. In order to orient the vertical cross-pieces 14 on the struts 11 in the Y direction, it is necessary, for all of the struts 11, to drive the strut 11 in a state in which the web portion 11b extend along the Y direction and the flange portions 11a extend along the X direction.

In this state in which the strut 11 is passed through the opening portion 28 of the structural unit U and the upper end portion of the strut 11 is abutted against the main plate 21a of the cross-piece bracket 21 mounted to the central portion of the vertical cross-piece 14 and thus sandwiched between the side plates 21b, the structural unit U is supported by the strut 11 in a stable manner, which facilitates the subsequent operation.

Here, even if there is a variation in the heights of the struts 11, there must be no variation in the heights (the vertical positions) of the vertical cross-pieces 14 on the struts 11. For this reason, it is necessary to make the heights of the vertical cross-pieces 14 uniform. Therefore, as shown in FIG. 22, the heights of the cross-piece bracket 21 and the vertical cross-piece 14 are adjusted by inserting or not inserting an appropriate number of spacers S between the upper end portion of the strut 11 and the main plate 21a of the cross-piece bracket 21. Thereafter, through the perforated holes 21d of one of the side plates 21b of the cross-piece bracket 21 and the elongated holes 11c of the flange portions 11a of the strut 11, two bolts 29 are screwed and fastened to the screw holes 21e of the other side plate 21b of the cross-piece bracket 21 to connect the cross-piece bracket 21 and the vertical cross-piece 14 to the upper end portion of the strut 11. This makes it possible to make the heights of the vertical cross-piece 14 on the struts 11 uniform.

Likewise, there must be no variation in the positions of the vertical cross-pieces 14 in the Y direction. For this reason, as shown in FIGS. 15 and 16, the bolts 23 fastening the central portion of the vertical cross-piece 14 and the tip portions of the supporting plates 21c of the cross-piece bracket 21 are loosened, the bolt 26 fastening an area toward the front end of the vertical cross-piece 14 to end portions of the side plate 12a of the arm 12 is loosened, and the bolt 26 fastening an area toward the back end of the vertical cross-piece 14 to end portions of the side plate 13a of the arm 13 is loosened, and, thereby, the vertical cross-piece 14 is moved in the Y direction, thus adjusting the position in the Y direction. The elongated holes 14e of the vertical cross-piece 14 are formed obliquely with respect to the longitudinal direction of the vertical cross-piece 14, and the elongated holes 14e of the vertical cross-piece 14 extend horizontally (in the Y direction) in a state in which the vertical cross-piece 14 is connected at an angle to the upper end portion of the strut 11. Accordingly, the bolts 23, 26 passing through the elongated holes 14e of the vertical cross-piece 14 can be moved in the Y direction and the vertical cross-piece 14 can also be moved in the Y direction, making it possible to adjust the position in the Y direction. Thereafter, the bolts 23, 26 are tightened so as to fix the vertical cross-piece 14. This makes it possible to fix the vertical cross-pieces 14 with the positions of the vertical cross-pieces 14 in the Y direction being aligned.

Finally, as shown in FIG. 22, for both of the two arm brackets 22, through the perforated holes 22d of one of the side plates 22b of the arm brackets 22 and the elongated holes 11d of the flange portions 11a of the strut 11, two (a total of four) bolts 30 are screwed and fastened to the screw holes 22e of the other side plate 22b of the arm brackets 22, and thereby the arm brackets 22 are fixed to the body portion of the strut 11.

Thus, the struts 11 are provided in a protruding manner, and, for each of the struts 11, the strut 11 is passed through the opening portion 28 of the structural unit U, and the upper end portion of the strut 11 is abutted against the main plate 21a of the cross-piece bracket 21 mounted to the central portion of the vertical cross-piece 14 and thus sandwiched between the side plates 21b. In this state in which the structural unit U is supported in a stable manner, the height (the vertical position) and the position in the Y direction of the vertical cross-piece 14 are adjusted and the structural unit U and the vertical cross-piece 14 are fixed. Accordingly, the operation of installing the structural object mount according to the first embodiment can be performed easily.

Further, the strut 11, the two arms 12, 13, and the vertical cross-piece 14 construct a truss, and therefore the structural object mount according to the first embodiment has a increased strength.

Since the location of connection of the upper end portion of the strut 11 to the central portion of the vertical cross-piece 14 is between the locations of connection of the arms 12, 13, the solar cell module 16 on the vertical cross-piece 14 can be supported in a stable manner. Moreover, as can be clearly seen from FIG. 1, two rows of solar cell modules 16 are respectively allocated to opposite sides of the central portion of the vertical cross-piece 14, and therefore the loads of the solar cell modules 16 hardly act so as to cause the strut 11 to collapse, which further increases the stability of the structural object mount according to the first embodiment.

Although the bolts 30 are used to fix the arm bracket 22 to the body portion of the strut 11, the arm bracket 22 does not need to be fixed to the body portion of the strut 11. The reason is that structural unit U can be supported in a stable manner simply by passing the strut 11 through the opening portion 28 of the structural unit U and connecting the upper end portion of the strut 11 to the vertical cross-piece 14 with the cross-piece bracket 21 disposed therebetween.

During a process in which a plurality of structural units U are mounted onto the platform of a truck, the truck is caused to run and stopped at the positions of the struts 11 successively, and the structural units U are unloaded from the truck, the strut 11 may be passed through the opening portion 28 of the structural unit U, the upper end portion of the strut 11 may be moved to the cross-piece bracket 21 to connect the upper end portion of the strut 11 to the vertical cross-piece 14 with the cross-piece bracket 21 disposed therebetween.

In this case, the operation of passing the strut 11 through the opening portion 28 of the structural unit U is performed mainly on the platform of the truck, and therefore the structural unit U does not need to be lifted above the upper end portion of the strut 11, or the effort to lift up the structural unit U is reduced, which further facilitates the operation. Furthermore, the operation efficiency can be increased by causing the truck to run, stopping the truck at the positions of the struts 11 successively, and mounting the structural unit U to the strut 11 on each of these occasions.

Next, a description will be given of a structure for connecting and fixing the cross-piece member 151, 152 constituting a component of the horizontal cross-piece 15 to the vertical cross-piece 14.

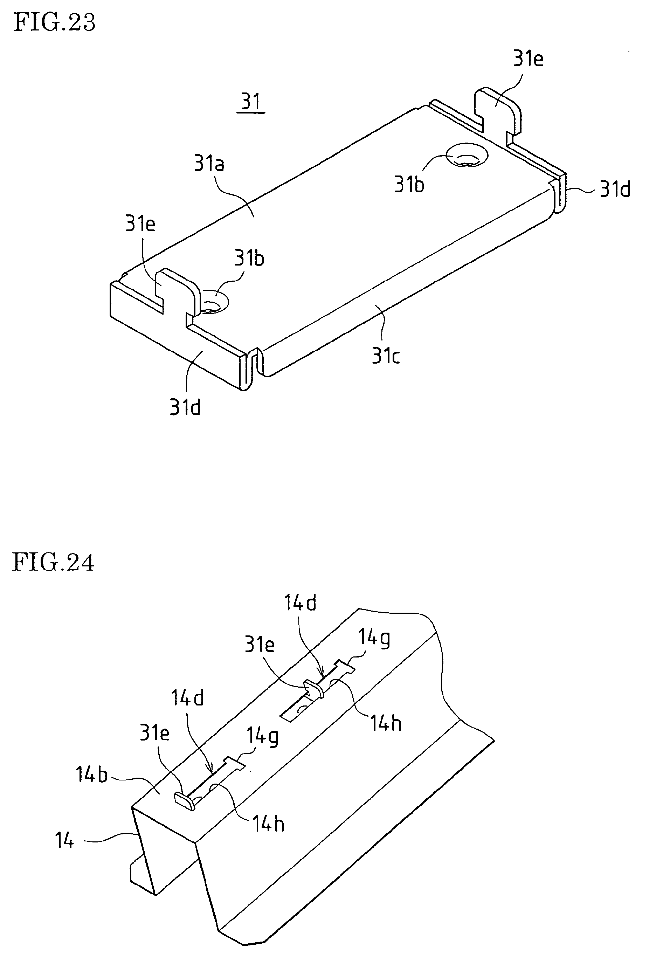

FIG. 23 is a perspective view showing a mounting fitting 31 used for connecting and fixing the cross-piece member 151, 152 of the horizontal cross-piece 15 to the vertical cross-piece 14. As shown in FIG. 23, the mounting fitting 31 includes a main plate 31a, side plates 31c bent on opposite sides of the main plate 31a, side plates 31d folded back twice at the front and back ends of the main plate 31a, and T-shaped supporting strips 31e protruding from the center of the respective corresponding side plates 31d. Two screw holes 31b are formed in the main plate 31a.

As shown in FIGS. 8(a), 8(b), and 15, a pair of T-shaped holes 14d are formed in the vicinity of opposite ends and at the central portion of the main plate 14b of the vertical cross-piece 14. At each pair of T-shaped holes 14d, the mounting fitting 31 is mounted to the main plate 14b of the vertical cross-piece 14. The mounting fittings 31 are provided at three locations, i.e., in the vicinity of the opposite ends and at the central portion of the main plate 14b of the vertical cross-piece 14.

As shown in FIG. 24, a head portion of each supporting strip 31e of the mounting fitting 31 is inserted into a slit 14g of the corresponding T-shaped hole 14d, and the supporting strip 31e is moved to an engaging hole 14h of the T-shaped hole 14d, and the head portion of the supporting strip 31e is hooked to the engaging hole 14h of the T-shaped hole 14d. Thereby, the mounting fitting 31 is mounted to the main plate 14b of the vertical cross-piece 14.

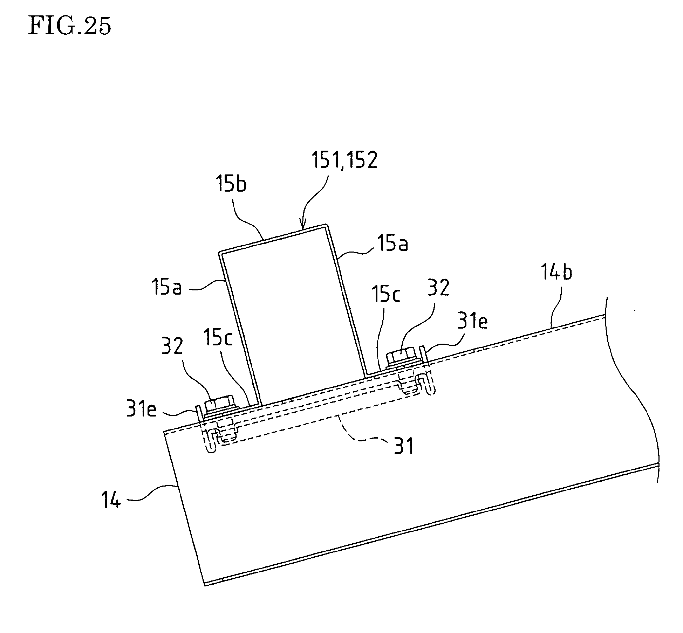

As shown in FIGS. 1 and 25, the cross-piece member 151, 152 is placed on the main plate 14b of the vertical cross-piece 14 so as to be orthogonal to the vertical cross-piece 14, and the brims 15c of the cross-piece member 151, 152 are arranged between the head portions of the supporting strips 31e of the mounting fitting 31. Then, the elongated holes 15g of the brims 15c of the cross-piece member 151, 152 are overlapped with the respective corresponding screw holes 31b of the mounting fitting 31 with the respective corresponding T-shaped holes 14d of the main plate 14b of the vertical cross-piece 14 interposed therebetween. Bolts 32 are screwed and temporarily fastened to the respective corresponding screw holes 31b of the mounting fitting 31 through the respective corresponding elongated holes 15g of the brims 15c of the cross-piece member 151, 152 and the respective corresponding T-shaped holes 14d of the main plate 14b of the vertical cross-piece 14.

In the temporarily fastened state, the bolts 32 can be moved relative to the cross-piece member 151, 152 along the respective corresponding elongated holes 15g of the brims 15c of the cross-piece member 151, 152. Therefore, the cross-piece member 151, 152 is moved along the elongated holes 15g (in the X direction of FIG. 1) such that the position in the X direction of the cross-piece member 151, 152 is adjusted.

The mounting fitting 31 can also be moved along the T-shaped holes 14d of the main plate 14b of the vertical cross-piece 14 (in the longitudinal direction of the vertical cross-piece 14), and the cross-piece member 151, 152 can also be moved along with the mounting fitting 31. By the movement of the cross-piece member 151, 152 in the longitudinal direction of the vertical cross-piece 14, the intervals between the three horizontal cross-pieces 15 disposed on the vertical cross-piece 14 are adjusted.

After the positions in the X direction of the three horizontal cross-pieces 15 are adjusted and the intervals between the horizontal cross-pieces 15 are adjusted, the bolts 32 of the mounting fittings 31 are fastened to fix the horizontal cross-pieces 15 to the vertical cross-pieces 14.

Next, a description will be given of a connection structure between a plurality of cross-piece members 151, 152 constituting the horizontal cross-piece 15.

The cross-piece member 151 shown in FIGS. 13(a) and 13(b) is the rightmost (first) cross-piece member of the horizontal cross-piece 15 of FIG. 1, and is disposed, spanning between the vertical cross-pieces 14 provided on the first and second struts 11 of FIG. 1. The cross-piece member 151 is fixed to the vertical cross-pieces 14 using the mounting fittings 31.

The cross-piece member 152 shown in FIG. 14 is the second cross-piece member, or one of the subsequent cross-piece members 152, of the horizontal cross-piece 15 of FIG. 1, and is disposed, spanning between the left end portion of the immediately preceding cross-piece member and the succeeding the vertical cross-piece 14. For example, the second cross-piece member 152 is disposed, spanning between the left end portion of the first cross-piece member 151 and the third the vertical cross-piece 14. The third cross-piece member 152 is disposed, spanning between the left end portion of the second cross-piece member 152 and the fourth the vertical cross-piece 14. The n-th cross-piece member 152 is disposed, spanning between the left end portion of the (n-1)th cross-piece member 152 and the (n+1)th the vertical cross-piece 14. The second and subsequent cross-piece members 152 are also fixed to the respective corresponding vertical cross-pieces 14 using the mounting fittings 31.

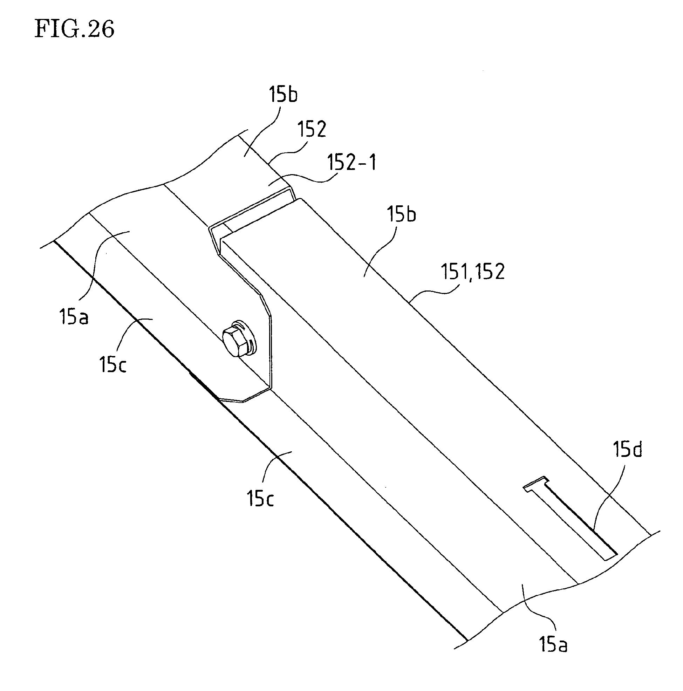

Then, as shown in FIG. 26, the left end portions of the side plates 15a of the first cross-piece member 151 are inserted inside and sandwiched between the one-end portions 152-1 of the side plates 15a of the second cross-piece member 152. The side plates 15a of the second cross-piece member 152 are connected to the side plates 15a of the first cross-piece member 151 using pipes, bolts, washers, and nuts in the same manner as that described with reference to FIG. 18.

Similarly, the left end portions of the side plates 15a of the (n-1)th cross-piece member 152 are inserted inside and sandwiched between the one-end portions 152-1 of the side plates 15a of the nth cross-piece member 152. The n-th side plates 15a are connected to the (n-1)th side plates 15a using pipes, bolts, washers, and nuts in the same manner as that described with reference to FIG. 18.

Thus, the single long horizontal cross-piece 15 is formed by connecting the plurality of cross-piece members 151 and 152.

Next, a description will be given of a guiding support member 17 for connecting and fixing an end of the solar cell module 16 to the horizontal cross-piece 15.

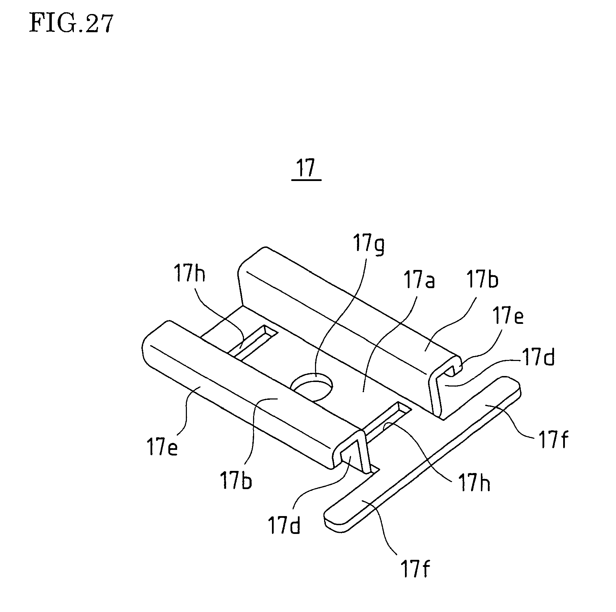

FIG. 27 is a perspective view showing the guiding support member 17. As shown in FIG. 27, the guiding support member 17 includes a main plate 17a, and lateral portions 17b formed by bending three times (formed by bending upward, outward, and downward in order) opposite side portions of the main plate 17a. The inner faces of the lateral portions 17b serve as the fitting grooves 17d, and hooking portions 17e are provided on the upper side of the fitting grooves 17d. In addition, first adjacent ends of the fitting grooves 17d are open, and stoppers 17f are provided at second adjacent ends of the fitting grooves 17d. The stoppers 17f are formed by extending one end portion of the main plate 17a in a direction orthogonal to the respective fitting grooves 17d. Furthermore, a perforated hole 17g is formed at the center of the main plate 17a, and slits 17h are formed on the respective corresponding opposite sides of the perforated hole 17g.

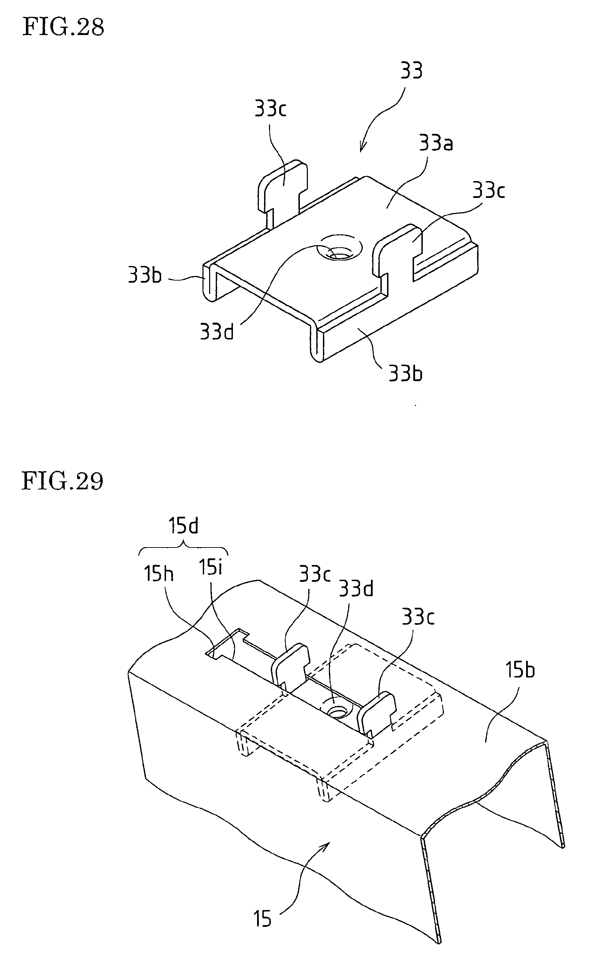

FIG. 28 is a perspective view showing a mounting fitting 33 used for fixing the guiding support member 17 to the horizontal cross-piece 15. As shown in FIG. 28, the mounting fitting 33 includes a main plate 33a, side plates 33b folded back twice on opposite sides of the main plate 33a, and T-shaped supporting strips 33c protruding from the center of the respective side plates 33b. A screw hole 33d is formed at substantially the center of the main plate 33a.

As shown in FIGS. 13(a), 13(b), and 14, the T-shaped holes 15d are formed at six locations of the main plate 15b of the cross-piece members 151, 152 used to form the horizontal cross-piece 15. For each of the T-shaped holes 15d, the mounting fitting 33 is mounted to the main plate 15b of the horizontal cross-piece 15.

As shown in FIG. 29, while head portions of the supporting strips 33c of the mounting fittings 33 are successively inserted into slits 15h of the respective corresponding T-shaped holes 15d of the main plate 15b of the horizontal cross-piece 15, the supporting strips 33c are moved to engaging holes 15i of the T-shaped holes 15d, and the head portions of the supporting strips 33c are hooked to the engaging holes 15i of the T-shaped holes 15d. Thereby, the mounting fittings 33 are mounted to the main plate 15b of the horizontal cross-piece 15.

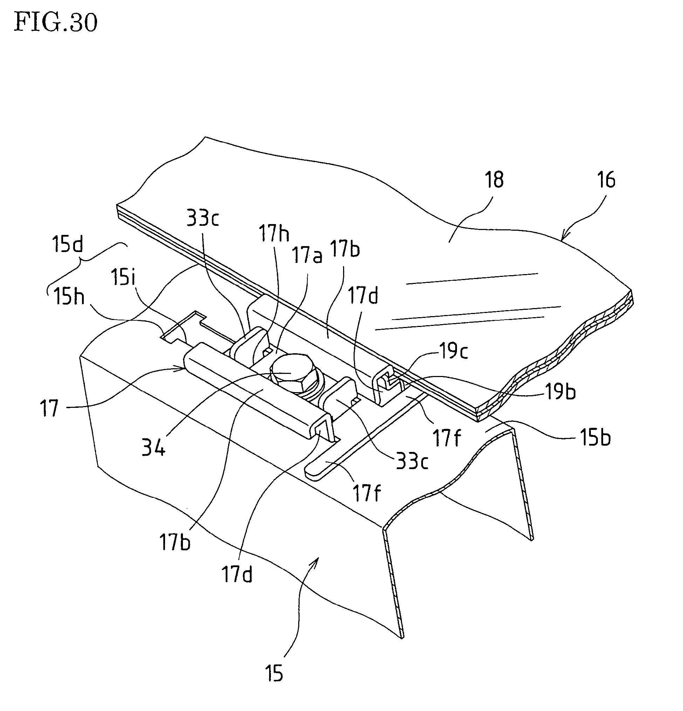

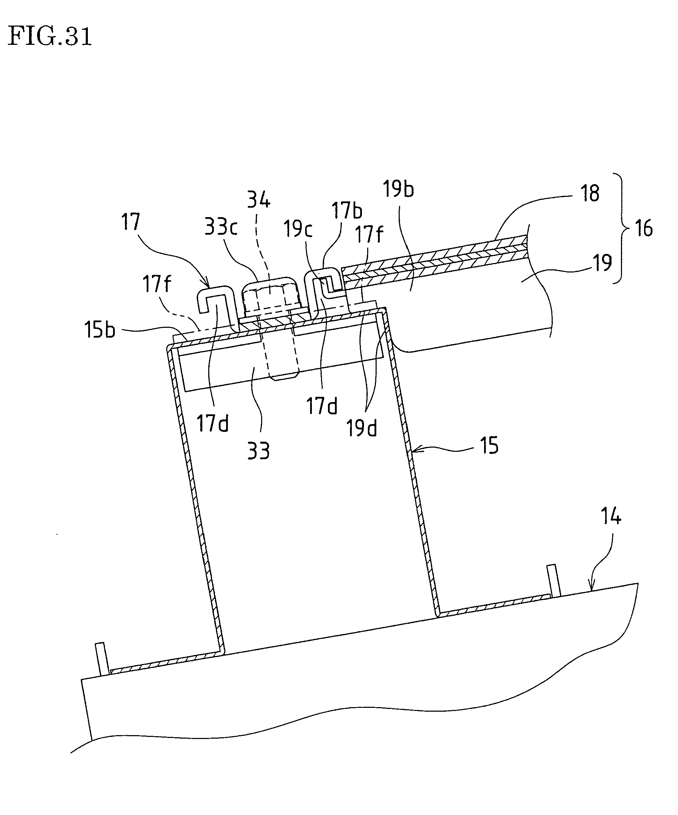

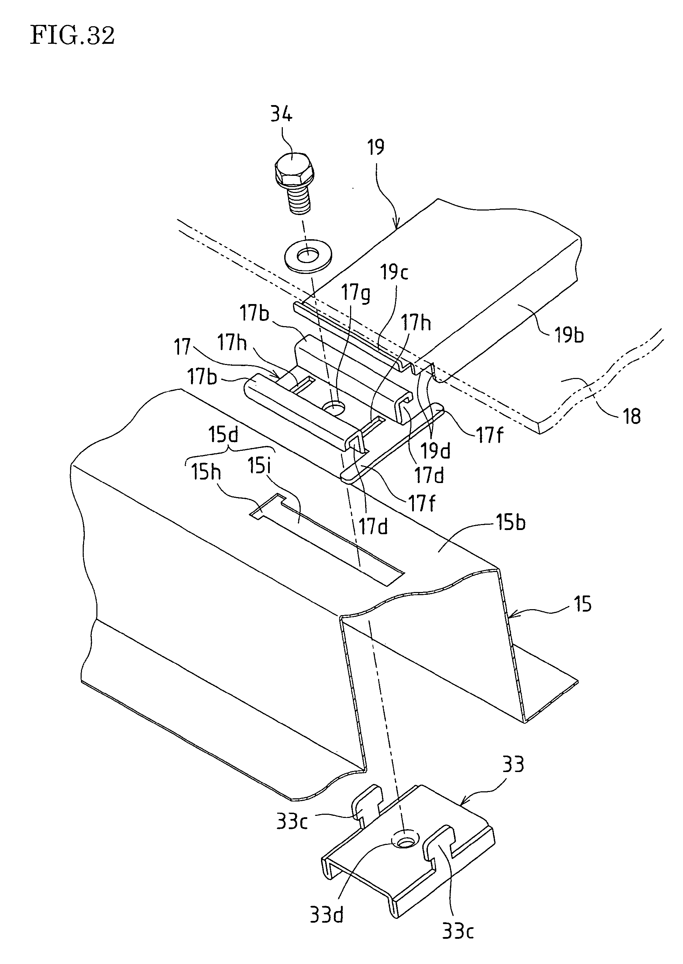

FIGS. 30 and 31 are a perspective view and a cross-sectional view showing a fixing structure for the guiding support member 17 using the mounting fitting 33. FIG. 32 is an exploded perspective view showing a fixing structure for the guiding support member 17 using the mounting fitting 33.

As shown in FIGS. 30, 31, and 32, the head portions of the supporting strips 33c of the mounting fitting 33 are hooked to the T-shaped hole 15d of the main plate 15b of the horizontal cross-piece 15 such that the head portions of the supporting strips 33c protrude above the main plate 15b of the horizontal cross-piece 15. The head portions of the supporting strips 33c are inserted into the slits 17h of the guiding support member 17 such that the guiding support member 17 is placed on the main plate 15b of the horizontal cross-piece 15. Then, the perforated hole 17g of the guiding support member 17 is overlapped with the screw hole 33d of the mounting fitting 33 with the T-shaped hole 15d of the horizontal cross-piece 15 interposed therebetween. The bolts 34 are screwed and fastened to the screw hole 33d of the mounting fitting 33 through the perforated hole 17g of the guiding support member 17 and the T-shaped hole 15d of the horizontal cross-piece 15. Thereby, the guiding support member 17 is fixed onto the main plate 15b of the horizontal cross-piece 15.

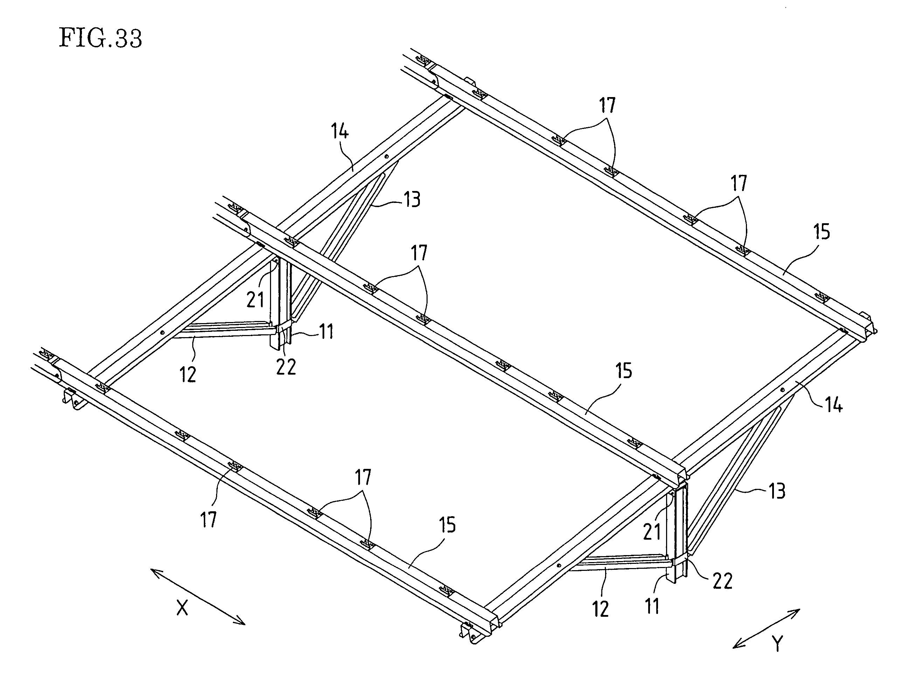

In the manner described above, the strut 11, the structural unit U, the horizontal cross-piece 15, the guiding support member 17, and so forth are assembled, and, thereby, a main structure of the mount as shown in FIG. 33 is formed. In FIG. 33, the struts 11 are provided in a protruding manner, and the structural object units U are mounted to the respective corresponding struts 11. Three horizontal cross-pieces 15 are disposed on the vertical cross-pieces 14 of the structural units U in a bridging manner, and a plurality of the guiding support members 17 are fixed onto the horizontal cross-pieces 15 with an interval.

Next, a description will be given of the support of the solar cell module 16 using the guiding support member 17 on the horizontal cross-piece 15.

As can be clearly seen from FIGS. 30 and 31, the fitting grooves 17d on the opposite sides of the guiding support member 17 are disposed parallel to the horizontal cross-piece 15, and a gap is formed between the hooking portion 17e (see FIG. 27) of each of the fitting grooves 17d and the main plate 15b of the horizontal cross-piece 15. Then, the fitting portion 19c of the tension bar 19 of the solar cell module 16 enters the fitting groove 17d through the gap between the hooking portion 17e of the fitting groove 17d and the main plate 15b of the horizontal cross-piece 15, and, thus, the fitting portion 19c of the tension bar 19 is fitted into the fitting groove 17d.

Further, the side plate 19b of the tension bar 19 abuts the stopper 17f of the guiding support member 17, and the abutting portion 19d of the tension bar 19 abuts the main plate 15b and the side plate 15a of the horizontal cross-piece 15 (a corner portion of the horizontal cross-piece 15).

An end of the tension bar 19 is supported as a result of the fitting portion 19c of the tension bar 19 fitting into the fitting groove 17d of the guiding support member 17 in this way, and, thereby, an end of the solar cell module 16 is supported on the main plate 15b of the horizontal cross-piece 15. Further, the side plate 19b of the tension bar 19 abuts the stopper 17f of the guiding support member 17, and the abutting portion 19d of the tension bar 19 to abut a corner portion of the horizontal cross-piece 15. Thereby, the solar cell module 16 is positioned. Moreover, the abutment of the side plate 19b of the tension bar 19 against the stopper 17f of the guiding support member 17 prevents the tension bar 19 from sliding, which makes it possible to also prevent the solar cell module 16 from sliding.

As shown in FIGS. 1 and 33, all the horizontal cross-pieces 15 have the same arrangement positions of the guiding support members 17 on the horizontal cross-piece 15. Namely, the first guiding support members 17 on the horizontal cross-pieces 15 are aligned in the Y direction, and the second guiding support members 17 on the horizontal cross-pieces 15 are aligned in the Y direction. Similarly, the nth guiding support members 17 on the horizontal cross-pieces 15 are aligned in the Y direction. Further, the pitch between the first and second guiding support members 17 is set to be the same as the pitch between the two tension bars 19 of each solar cell module 16, and the pitch between the third and fourth guiding support members 17 is set to be the same as the pitch between the two tension bars 19 of each solar cell module 16. Similarly, the pitch between an odd-numbered guiding support member 17 and an even-numbered guiding support member 17 is set to be the same as the pitch between the two tension bars 19 of each solar cell module 16. That is to say, the guiding support members 17 are positioned in all of the horizontal cross-pieces 15 such that ends of the two tension bars 19 of each solar cell module 16 can be supported by an odd-numbered guiding support member 17 and an even-numbered guiding support member 17.

Further, the pitch between the second and third guiding support members 17 and the pitch between the fourth and fifth guiding support members 17, or in other words, the pitch between an even-numbered guiding support member 17 and an odd-numbered guiding support member 17 is set to be substantially the same as or slightly wider than the pitch between the tension bars 19 of two solar cell modules 16 disposed adjacent to each other. This makes it possible to arrange solar cell modules 16 side by side, with almost no gap provided between two adjacent solar cell modules 16.

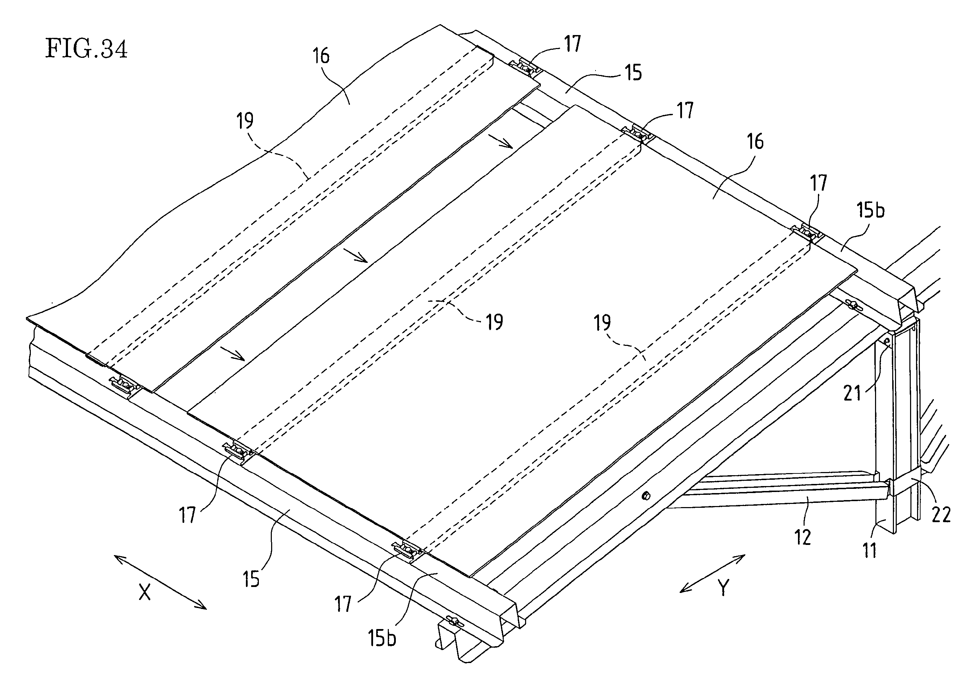

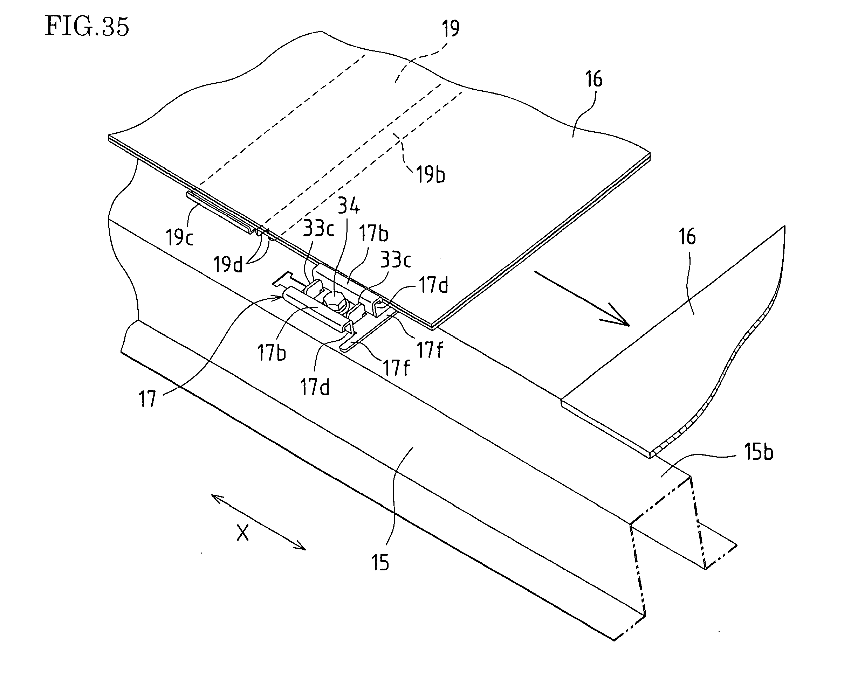

Here, in order to insert the fitting portion 19c of the tension bar 19 into the fitting groove 17d of the guiding support member 17, an end of the tension bar 19 of the solar cell module 16 is disposed outside of the guiding support member 17 of the horizontal cross-piece 15, and the end of the tension bar 19 of the solar cell module 16 is placed on the main plate 15b of the horizontal cross-piece 15 as shown in FIGS. 34 and 35. Then, as shown in FIG. 31, the abutting portion 19d of the tension bar 19 is abutted to the main plate 15b and the side plates 15a of the horizontal cross-piece 15 (a corner portion of the horizontal cross-piece 15). As a result of this abutment, fitting portion 19c of the tension bar 19 is positioned with respect to the corner portion of the horizontal cross-piece 15, and, consequently, the fitting portion 19c of the tension bar 19 overlaps the fitting groove 17d of the guiding support member 17 when viewed in the X direction.

In this state, as the abutting portion 19d of the tension bar 19 is slid along the main plate 15b and the side plate 15a of the horizontal cross-piece 15 by sliding the solar cell module 16 in the X direction as shown in FIGS. 34 and 35, the fitting portion 19c of the tension bar 19 slides into the fitting groove 17d of the guiding support member 17 from one open end of the fitting groove 17d, and fits into the fitting groove 17d of the guiding support member 17. Furthermore, the side plate 19b of the tension bar 19 abuts the stopper 17f located at the other end of the fitting groove 17d of the guiding support member 17.

As a result, an end of the solar cell module 16 is supported on the main plate 15b of the horizontal cross-piece 15. Also, the side plate 19b of the tension bar 19 abuts the stopper 17f of the guiding support member 17, and the abutting portion 19d of the tension bar 19 abuts the corner portion of the horizontal cross-piece 15. Thereby, the solar cell module 16 is positioned. Furthermore, the abutment of the side plate 19b of the tension bar 19 against the stopper 17f of the guiding support member 17 prevents the tension bar 19 from sliding (sliding in the direction of descending order of the arrangement of the solar cell modules 16) and also prevents the solar cell modules 16 from sliding in the direction of descending order of their arrangement.

In the lower horizontal cross-piece 15 and the middle horizontal cross-piece 15 shown in FIG. 1, the tension bars 19 of the rightmost (first) solar cell module 16 are disposed outside, at their opposite ends, from the first and second guiding support members 17 of the horizontal cross-piece 15, and the opposite ends of each of the tension bars 19 of the solar cell module 16 are placed on the horizontal cross-pieces 15, respectively. At this time, under the self weight of the solar cell module 16, the abutting portion 19d of each tension bar 19 that is located downward in the direction of inclination of the solar cell module 16 abuts a corner portion of the lower horizontal cross-piece 15. As a result of this abutment, the fitting portion 19c of each of the tension bars 19 at one end located downward in the direction of inclination overlaps the fitting groove 17d of the guiding support member 17 of the lower horizontal cross-piece 15 when viewed in the X direction.

Also, the interval between the horizontal cross-pieces 15 is previously adjusted such that the spacing distance between the fitting grooves 17d of the guiding support members 17 on the horizontal cross-pieces 15 is the same as the spacing distance between the fitting portions 19c located at the opposite ends of the tension bar 19. This adjustment can be performed at the time of fixing the horizontal cross-pieces 15 using the mounting fittings 31 as described above. In this case, when the abutting portion 19d of each tension bar 19 that is located downward in the direction of inclination of the solar cell module 16 abuts a corner portion of the lower horizontal cross-piece 15, the fitting portion 19c of each tension bar 19 at the other end located upward in the direction of inclination also overlaps the fitting groove 17d of the guiding support member 17 of the middle horizontal cross-piece 15 when viewed in the X direction.

In this state, as shown in FIGS. 34 and 35, the fitting portions 19c located at the opposite ends of each tension bar 19 are inserted and fitted into the fitting grooves 17d of the guiding support members 17 on the horizontal cross-pieces 15 by sliding the solar cell module 16 in the X direction such that the side plate 19b of each tension bar 19 is abutted against the stopper 17f of the guiding support member 17 on each horizontal cross-piece 15, and, thereby, opposite ends of the solar cell module 16 are supported on the horizontal cross-pieces 15 in a bridging manner.

At the time of the sliding of the solar cell module 16, as shown in FIG. 31, the abutting portion 19d of the tension bar 19 that is located downward in the direction of inclination of the solar cell module 16 remains abutting a corner portion of the lower horizontal cross-piece 15. Accordingly, the downward and horizontal movements of the abutting portion 19d of the tension bar 19 are restricted, and therefore the solar cell module 16 is prevented from slipping off under its weight downward in the direction of inclination, making it possible to ensure safety of the operation.

Note that, as can be clearly seen from FIG. 31, a play is provided between the fitting portion 19c of the tension bar 19 and the fitting groove 17d of the guiding support member 17. Therefore, no problem is caused by a slight positional shift of the fitting portion 19c of the tension bar 19 relative to the fitting groove 17d of the guiding support member 17.

Subsequently, according to the same procedure, the fitting portions 19c at opposite ends of the tension bars 19 of the second solar cell module 16 are inserted and fitted into the fitting grooves 17d of the guiding support members 17 on the horizontal cross-pieces 15 such that the side plate 19b of each tension bar 19 is abutted against the stopper 17f of the guiding support member 17 on each horizontal cross-piece 15, and opposite ends of the solar cell module 16 are supported on the horizontal cross-pieces 15. Similarly, the third, fourth, and further solar cell modules 16 are supported on the horizontal cross-pieces 15 in a bridging manner, and the solar cell modules 16 in the lower (first) row are arranged side by side between the lower horizontal cross-piece 15 and the middle horizontal cross-piece 15.

In the middle horizontal cross-piece 15 and the upper horizontal cross-piece 15 shown in FIG. 1 as well, opposite ends of the tension bars 19 of the solar cell modules 16 are fitted to the guiding support members 17 on the horizontal cross-pieces 15 by placing opposite ends of the tension bars 19 of the rightmost (first) solar cell module 16 on the main plates 15b of the horizontal cross-pieces 15 and sliding them in the X direction. Thereby, opposite ends of the solar cell module 16 are supported on the horizontal cross-pieces 15 in a bridging manner. Then, the second, third, and further solar cell modules 16 are also supported on the horizontal cross-pieces 15 in a bridging manner according to the same procedure, and the solar cell modules 16 in the upper (second) row are arranged side by side between the middle horizontal cross-piece 15 and the upper horizontal cross-piece 15.

At this time, the guiding support members 17 on the middle horizontal cross-piece 15 support both the solar cell modules 16 in the lower (first) row and the solar cell modules 16 in the upper (second) row. The fitting grooves 17d on opposite sides of each guiding support member 17 face the solar cell modules 16 in the lower (first) raw and the solar cell modules 16 in the upper (second) row, respectively. The fitting portion 19c of each tension bar 19 that is at an end located upward in the inclination in the lower (first) row fits into the fitting groove 17d on one side of each guiding support member 17. The fitting portion 19c of each tension bar 19 that is at an end located downward in the direction of inclination in the upper (second) row fits into the fitting groove 17d on the other side of the guiding support member 17.

Further, in both the lower (first) row and the upper (second) row, the pitch between an odd-numbered guiding support member 17 and an even-numbered guiding support member 17 is set to be substantially the same as or slightly wider than the pitch between the tension bars 19 of two solar cell modules 16 disposed adjacent to each other. Therefore, it is possible to arrange the solar cell modules 16 side by side, with almost no gap provided between two adjacent solar cell modules 16.

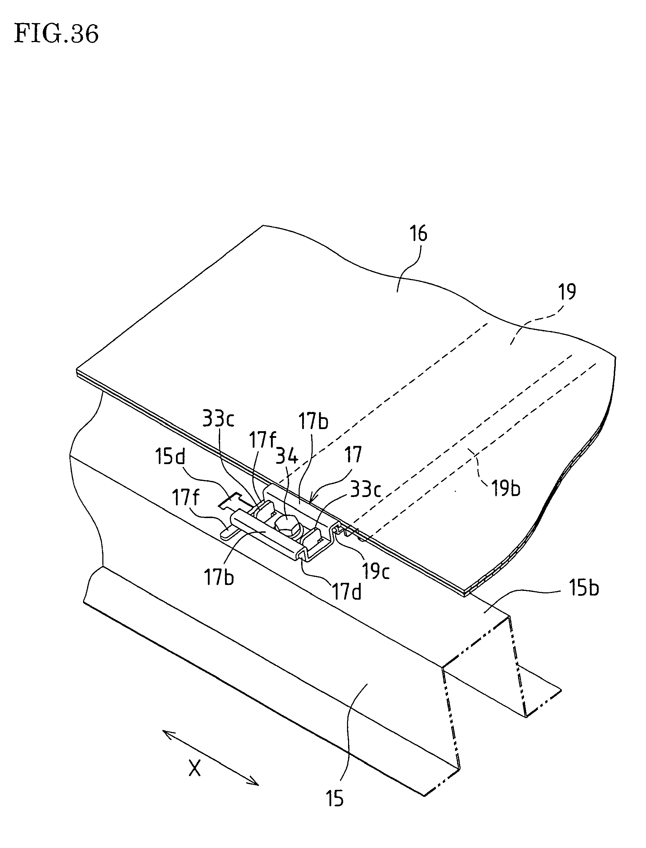

As for the final solar cell module 16, as shown in FIG. 36, the final guiding support member 17 on the horizontal cross-piece 15 is temporarily removed, and the guiding support member 17 is reversed left to right. Thereafter, the guiding support member 17 is fixed again onto the horizontal cross-piece 15, and the end of the tension bar 19 is supported by fitting the fitting portion 19c of the tension bar 19 into the fitting groove 17d of the guiding support member 17. In this case as well, the tension bar 19 is prevented from sliding by causing the side plate 19b of the tension bar 19 to abut the stopper 17f of the guiding support member 17. However, since the guiding support member 17 is reversed left to right, the direction in which the sliding is prevented is the direction of ascending order of the arrangement of the solar cell modules 16. Accordingly, the final solar cell module 16 is prevented from sliding in the direction of the ascending order. For all of the horizontal cross-pieces 15, the final guiding support member 17 is reversed left to right and fixed, and, thereby, the final solar cell module 16 is prevented from sliding in the direction of the ascending order.

When the final solar cell module 16 is prevented from sliding in the direction of the ascending order in this way, the solar cell modules 16 are arranged side by side without a gap as described above. Therefore, the solar cell modules 16 can be prevented from sliding in the direction of the ascending order. Accordingly, for all the solar cell modules 16, the fitting portion 19c of each tension bar 19 cannot be pulled out from the fitting groove 17d of the guiding support member 17 by sliding the solar cell module 16 in the direction of the ascending order, and, thus, the solar cell module 16 cannot be removed. The solar cell modules 16 cannot be slid in the direction of the descending order because the solar cell modules 16 are prevented from sliding in the direction of the descending order by the stoppers 17f of the guiding support members 17 preceding the last guiding support member 17.

Therefore, when a plurality of solar cell modules 16 are arranged side by side, spanning between the horizontal cross-pieces 15, then the final guiding support member 17 on each horizontal cross-piece 15 is temporarily removed, the guiding support member 17 is reversed left to right, the guiding support member 17 is fixed again on the corresponding horizontal cross-piece 15, an end of the tension bar 19 is supported by the guiding support member 17, and the final solar cell module 16 is prevented from sliding in the direction of the ascending order, it is impossible to remove the solar cell module 16. Accordingly, the solar cell modules 16 cannot be slid in either in the direction of the ascending order or the direction of the descending order.

However, the guiding support member 17 is fixed to the horizontal cross-piece 15 with the mounting fitting 33 and the bolt 34, and the guiding support member 17 can be removed by unscrewing the bolt 34. Accordingly, the solar cell module 16 can be removed by removing the four guiding support members 17 supporting opposite ends of the tension bars 19 of the solar cell module 16. Therefore, when the replacement or maintenance of any of the solar cell modules 16 is necessary, it is possible to remove only that solar cell module 16.

Thus, with the structural object mount according to the first embodiment, a plurality of solar cell modules 16 can be arranged side by side, spanning between the horizontal cross-piece 15, by repeating, for each of the solar cell modules 16, the operation of disposing the solar cell module 16, spanning between the horizontal cross-pieces 15, and inserting and fitting the fitting portions 19c on opposite ends of each tension bar 19 of the solar cell module 16 into the fitting grooves 17d of the guiding support members 17 on the horizontal cross-piece 15 by sliding the solar cell module 16 such that the side plate 19b of each tension bar 19 is abutted against the stopper 17f of the guiding support member 17 on each horizontal cross-piece 15.

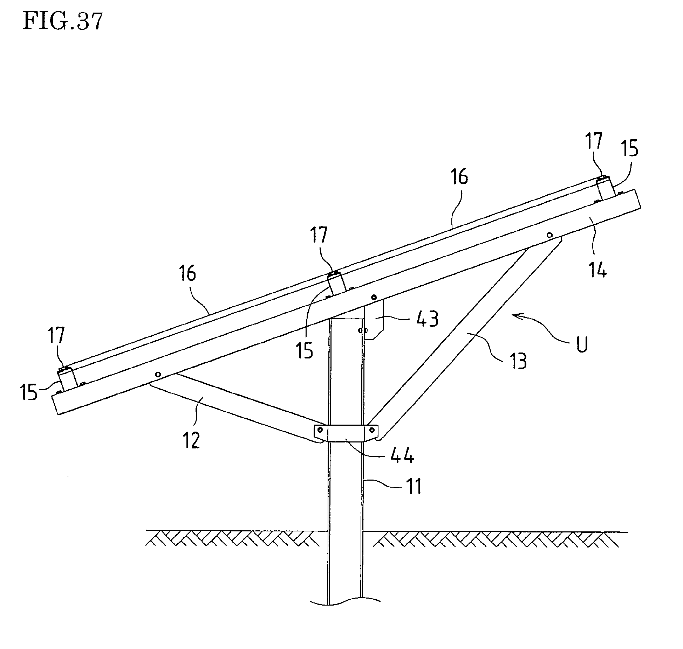

Next, a description will be given of a second embodiment of the structural object mount of the present invention. FIG. 37 is a side view showing a solar photovoltaic system that supports a plurality of solar cell modules using a structural object mount according to the second embodiment of the present invention. In FIG. 37, portions having the same functions as those in FIG. 1 are denoted by the same reference numerals.

In this solar photovoltaic system, the vertical cross-piece 14 is connected at an angle to the upper end portion of the strut 11, the two arms 12, 13 are disposed, spanning between the body portion of the strut 11 and the vertical cross-piece 14, and the vertical cross-piece 14 is supported on the upper end portion of the strut 11.

Although FIG. 37 only shows a single strut 11, a single vertical cross-piece 14, and two arms 12, 13, actually, a plurality of struts 11 are provided in a protruding manner, and vertical cross-pieces 14 are connected to the upper end portions of the respective corresponding struts 11, two arms 12, 13 are disposed spanning between of the body portion of each strut 11 and the corresponding vertical cross-piece 14, so that the vertical cross-pieces 14 are supported on the upper end portions of the respective corresponding strut 11. As with FIG. 1, the vertical cross-pieces 14 are disposed parallel with an interval therebetween, three horizontal cross-pieces 15 are disposed so as to be orthogonal to the vertical cross-pieces 14, the horizontal cross-pieces 15 are arranged side by side on the vertical cross-pieces 14, a plurality of solar cell modules 16 are disposed, spanning between the horizontal cross-pieces 15, and opposite ends of the solar cell modules 16 are fixed and supported by a plurality of guiding support members 17 that are fixed onto the horizontal cross-pieces 15 with an interval.

A cross-piece bracket 43 is interposed between an upper end portion of the strut 11 and the vertical cross-piece 14, the upper end portion of the strut 11 and the vertical cross-piece 14 are coupled by the cross-piece bracket 43.

A set of two arm brackets 44 are interposed between end portions of the two arms 12, 13 that extend to the body portion of the strut 11, the end portions of the arms 12, 13 are coupled by the arm brackets 44, and the body portion of the strut 11 is inserted between the arm brackets 44.

In a solar photovoltaic system having this configuration as well, a plurality of solar cell modules 16 are mounted in a row sideways between the lower horizontal cross-piece 15 and the middle horizontal cross-piece 15. Likewise, a plurality of solar cell modules 16 are mounted in a row sideways between the middle horizontal cross-piece 15 and the upper horizontal cross-piece 15.

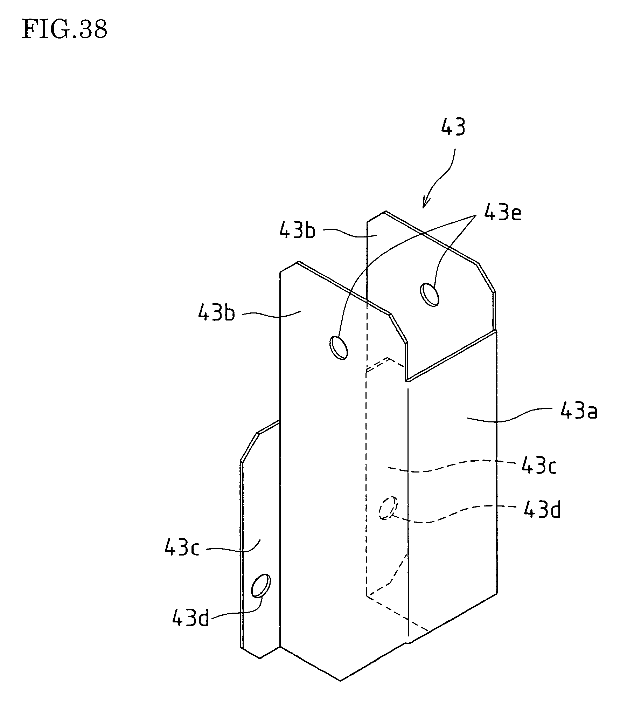

FIG. 38 is a perspective view showing the cross-piece bracket 43. As shown in FIG. 38, the cross-piece bracket 43 includes a main plate 43a, a pair of side plates 43b bent on opposite sides of the main plate 43a and brims 43c bent outward at one edge of the respective corresponding side plates 43b. The brims 43c have a length extending from one end of the side plate 43b to the vicinity of the center thereof.

The interval between opposite ends of the outer faces of the brims 43c are set to be substantially the same as the width of the flange portion 11a of the strut 11. Two perforated hole 43d are formed in the brims 43c at the same interval as the interval between the elongated holes 11c of the flange portion 11a of the strut 11.

The interval between the outer faces of the side plates 43b are set to be substantially the same as the interval between the inner faces of the side plates 14a of the vertical cross-piece 14, making it possible to insert the side plates 43b between the inner faces of the side plates 14a of the vertical cross-piece 14. Perforated holes 43e are formed in the respective corresponding side plates 43b.

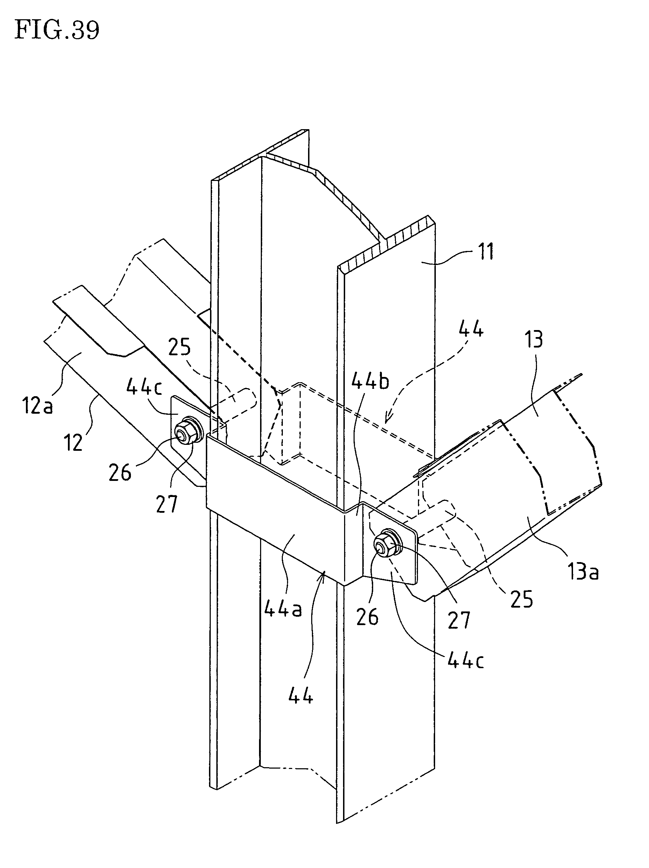

FIG. 39 is a perspective view showing the periphery of the arm brackets 44 that are used in a pair. As shown in FIG. 39, the arm brackets 44 each include a main plate 44a, a pair of side plates 44b bent on opposite sides of the main plate 44a and brims 44c bent outward at one edge of the respective corresponding side plates 44b. Perforated holes (not shown) are formed in the respective corresponding brims 44c.

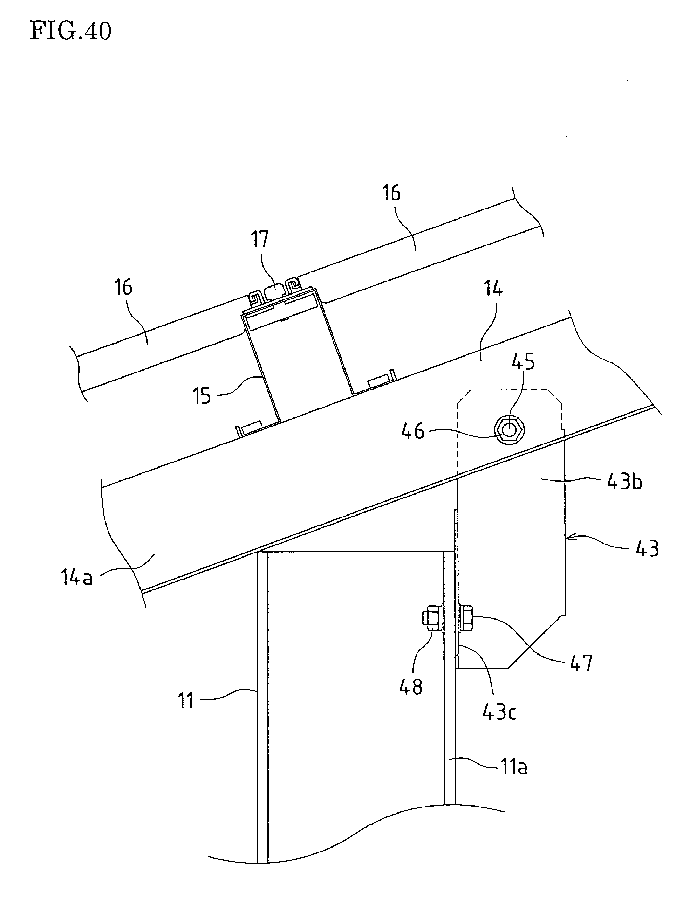

As shown in FIG. 40, at the central portion of the vertical cross-piece 14, the side plates 43b of the cross-piece bracket 43 are inserted between and overlapped with the inner faces of the side plates 14a of the vertical cross-piece 14, and a bolt 45 is passed through the perforated holes of the side plates 14a of the vertical cross-piece 14 and the perforated holes 43e of the side plates 43b of the cross-piece bracket 43. A nuts 46 is screwed and fastened to the bolt 45, and thereby, the cross-piece bracket 43 is mounted.

As shown in FIG. 39, with the two arm brackets 44 being faced with each other, the brims 44c located on opposite sides of the arm brackets 44 are overlapped with the outer faces of end portions of the side plates 12a, 13a of the arms 12, 13. Also, a pipe 25 is inserted between the side plates 12a of the arm 12, a bolt 26 is passed through the pipe 25, the perforated holes 12d of the side plates 12a of the arm 12, the perforated holes of the brims 44c located on one side of the arm brackets 44, and a washer. A nut 27 is screwed and fastened to one end of the bolt 26, and the end portions of the side plates 12a of the arm 12 are connected to the brims 44c located on one side of the arm brackets 44. In same manner, end portions of the side plates 13a of the arm 13 are connected to the brims 44c located on the other side of the arm brackets 44. A rectangular opening portion is formed inside the main plates 44a and the side plates 44b of the two arm brackets 44.

Thus, the cross-piece bracket 43 is mounted to the central portion of the vertical cross-piece 14, end portions of the arms 12, 13 are coupled with the two arm brackets 44 disposed therebetween. Also, one end portion of the arm 12 is connected to an area toward the front end of the vertical cross-piece 14, and one end portion of the arm 13 is connected to an area toward the back end of the vertical cross-piece 14. Thereby, the structural unit U is configured.

The structural unit U is also mounted to the strut 11 by passing the strut 11 through the opening portion. In this case, two sets of bolts 26 and nuts 27 located between the arm brackets 44 and the arms 12, 13 are loosened, so that the space between the arm brackets 44, or in other words, the opening portion is widened. This results in a play between the opening portion and the strut 11, making it possible to pass the strut 11 through the opening portion.

Then, after passing the strut 11 through the opening portion, the two sets of bolts 26 and nuts 27 located between the arm brackets 44 and the arms 12, 13 are tightened. This narrows the space between the arm brackets 44 to eliminate the play between the opening portion and the strut 11, and thereby the strut 11 is sandwiched and fixed between the arm brackets 44.

As shown in FIG. 40, the vertical cross-piece 14 is placed on a corner of the upper end portion of the strut 11, and the brims 43c of the cross-piece bracket 43 are overlapped with the flange portions 11a of the strut 11. Two bolts 47 are passed through the perforated holes 43d of the brims 43c and the elongated holes 11c of the flange portions 11a of the strut 11. Nuts 48 are screwed and fastened to the respective corresponding bolts 47 to connect the cross-piece bracket 43 and the vertical cross-piece 14 to the upper end portion of the strut 11.

Thereafter, according to the same procedure as that described with reference to FIGS. 23 to 36, the horizontal cross-pieces 15 are placed and fixed onto the vertical cross-pieces 14, and the solar cell modules 16 are disposed, spanning between the horizontal cross-pieces 15, and, thereby, the solar photovoltaic system is constructed.

In the second embodiment as well, it is sufficient to perform a simple installation operation of passing the strut 11 through the opening portion of the structural unit U, and connecting the upper end portion of the strut 11 to the central portion of the vertical cross-piece 14 with the cross-piece bracket 43 disposed therebetween. Further, the strut 11, the two arms 12, 13, and the vertical cross-piece 14 constructs a truss, and therefore the structural object mount has an increased strength.

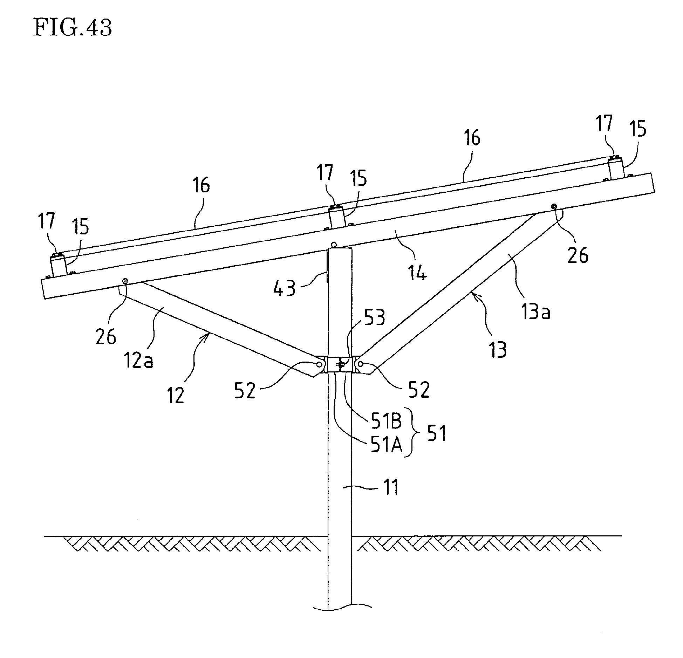

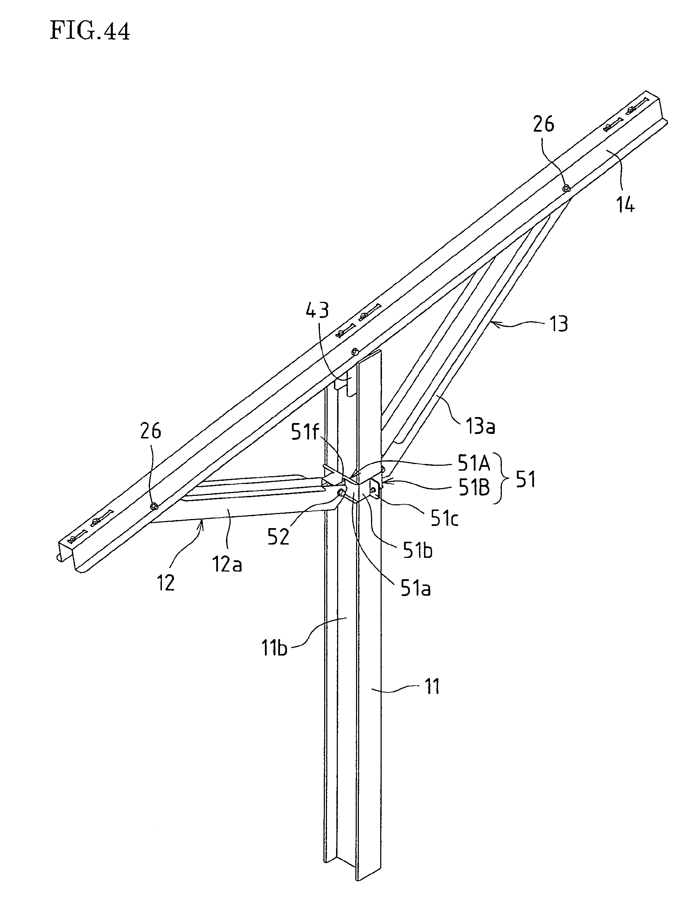

Next, a description will be given of a third embodiment of the structural object mount of the present invention. FIG. 43 is a side view showing a solar photovoltaic system that supports a plurality of solar cell modules using a structural object mount according to the third embodiment. FIG. 44 is a perspective view showing the structural object mount according to the third embodiment. In FIGS. 43 and 44, portions having the same functions as those in FIG. 1 are denoted by the same reference numerals.

In this solar photovoltaic system, as shown in FIGS. 43 and 44, end portions of the two arms 12, 13 are connected toward opposite ends of the vertical cross-piece 14, and a location in the vicinity of the center of the vertical cross-piece 14 is connected to the upper end portion of the strut 11 with the cross-piece bracket 43 disposed therebetween. The other end portions of the arms 12, 13 are connected to an arm bracket 51 that surrounds the perimeter of the strut 11, and, thereby, the vertical cross-piece 14 is supported at an angle.

Although FIGS. 43 and 44 only show a single strut 11, a single vertical cross-piece 14, and two arms 12, 13, actually, as with FIG. 1, a plurality of struts 11 are provided in a protruding manner, and the vertical cross-pieces 14 are disposed parallel with an interval therebetween, three horizontal cross-pieces 15 are disposed so as to be orthogonal to the vertical cross-pieces 14, the horizontal cross-pieces 15 are arranged side by side on the vertical cross-pieces 14, a plurality of solar cell modules 16 are disposed, spanning between the horizontal cross-pieces 15, and opposite ends of the solar cell modules 16 are fixed and supported by a plurality of guiding support members 17.

This structural object mount according to the third embodiment is different from the first and second embodiments in that the arm bracket 51 is used and with regard to the installation method thereof.

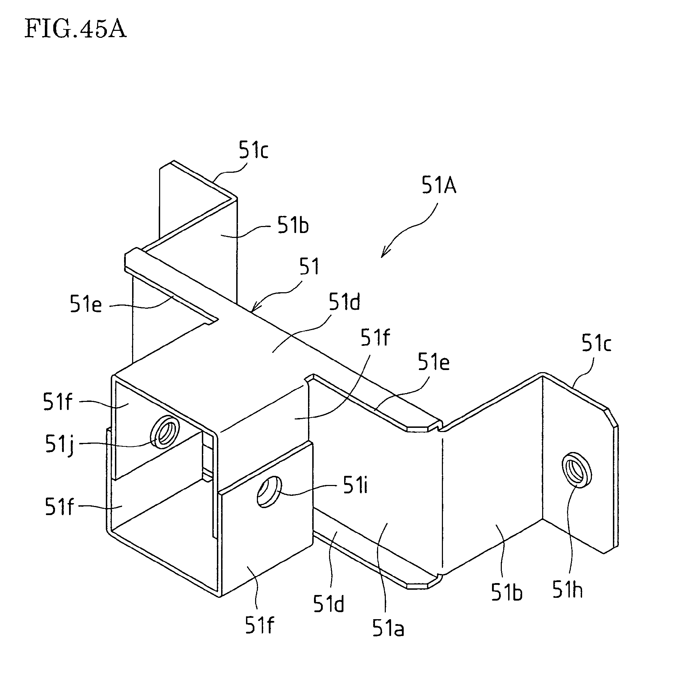

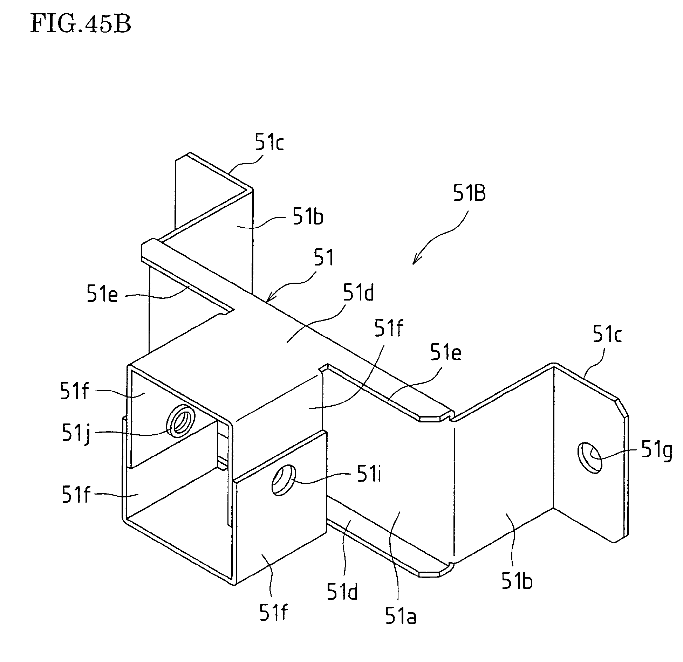

FIGS. 45A and 45B are perspective views showing a first and a second bracket 51A, 51B of the arm bracket 51. The arm bracket 51 is divided into the first and second brackets 51A, 51B, and is formed by combining the first and second brackets 51A, 51B. Each of the first and second brackets 51A, 51B is formed by cutting and bending a metal plate, and includes a main plate 51a, a pair of side plates 51b bent at opposing edges of the main plate 51a, brims 51c bent outward at edges of the corresponding respective side plates 51b, supporting portions 51d bent at the other opposing edges of the main plate 51a, and coupling plates 51f that are partly separated at cut portions 51e of the respective corresponding supporting portions 51d and are bend so as to face each other. Between the coupling plates 51f of one of the supporting portions 51d, the coupling plates 51f of the other supporting portion 51d are sandwiched. Perforated holes 51i are formed in the respective corresponding coupling plates 51f (the outer coupling plates 51f) of one of the supporting portions 51d, and screw holes 51j are formed in the respective corresponding coupling plates 51f (the inner coupling plates 51f) of the other supporting portion 51d sandwiched between the outer coupling plates 51f. Also, screw holes 51h are formed in the respective corresponding brims 51c of the first bracket 51A, and perforated holes 51g are formed in the respective corresponding brims 51c of the second bracket 51B.

Next, a description will be given of a method for installing the structural object mount according to the third embodiment. First, at the installation site, a plurality of struts 11 are driven into the ground with an interval therebetween so as to be provided in a protruding manner, as shown in FIG. 1.

A unit made up of the arms 12, 13, the vertical cross-piece 14, the cross-piece bracket 43, and the first and second brackets 51A, 51B is assembled at the manufacturing factory or the installation site of the structural object mount. In this unit assembly step, using the pipe 25, the bolt 26, the washer, and the nut 17 as shown in FIG. 18, end portions of the arms 12, 13 are connected toward opposite ends of the vertical cross-piece 14. Also, as shown in FIGS. 43, 44, and 47, the coupling plates 51f of the first bracket 51A are sandwiched between the inner faces of the end portions of the side plates 12a of the arm 12. Two bolts 52 are screwed and fastened to the screw holes 51j of the inner coupling plates 51f, and the end portion of the arm 12 is connected to the first bracket 51A through the perforated holes of the side plates 12a and the perforated holes 51i of the outer coupling plates 51f. In the same manner, the coupling plates 51f of the second brackets 51B are sandwiched between the inner faces of the end portions of the side plates 13a of the arm 13. Two bolts 52 are screwed and fastened to the screw holes 51j of the inner coupling plates 51f through the perforated holes of the side plates 13a and the perforated holes 51i of the outer coupling plates 51f, and the end portion of the arm 13 is connected to the second bracket 51B. Furthermore, the side plates 43b of the cross-piece bracket 43 are inserted between and overlapped with the inner faces of the side plates 14a of the vertical cross-piece 14, and the side plates 14a of the vertical cross-piece 14 are connected to the side plates 43b of the cross-piece bracket 43 using two sets of bolts and nuts.

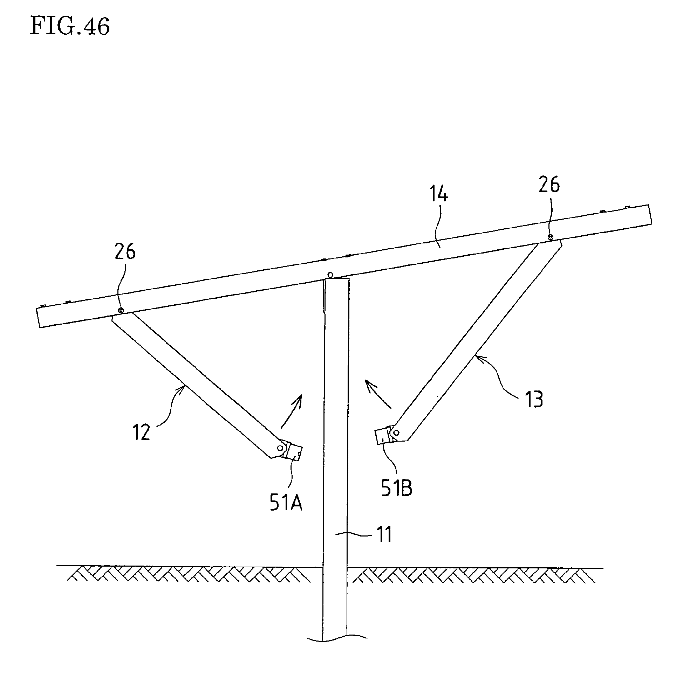

A plurality of units assembled in this manner are transported to the respective locations of installation of the struts 11, and the units are mounted to the struts 11 on a strut-by-strut basis. In this mounting step, as shown in FIG. 46, the central portion of the vertical cross-piece 14 is placed on an upper end portion of the strut 11, and the brims 43c of the cross-piece bracket 43 (shown in FIG. 38) are overlapped with the web portion 11b (shown in FIG. 44) of the strut 11. Two bolts (not shown) are passed through the perforated holes 43d of the brims 43c and elongated holes (not shown) that are elongated in the vertical direction of the web portion 11b. Nuts are screwed and fastened to the respective corresponding bolts to connect the cross-piece bracket 43 to the upper end portion of the strut 11.

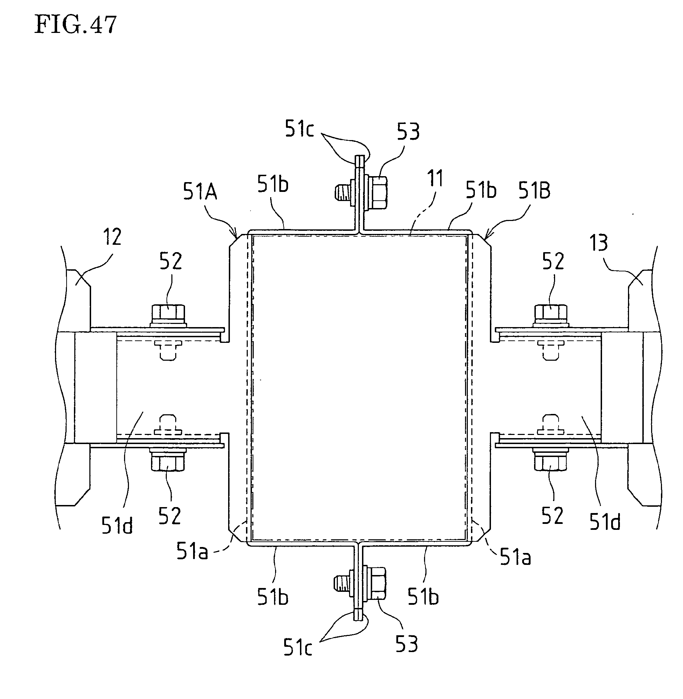

Then, as shown in FIG. 46, the arms 12, 13 are rotated with the respective corresponding bolts 26 on the vertical cross-piece 13 as the center of rotation, and the first and second brackets 51A, 51B are caused to approach the strut 11 connected to the end portions of the arms 12, 13. As shown in FIG. 47, the strut 11 is sandwiched between the main plate 51a and the side plates 51b of the first bracket 51A and the main plate 51a and the side plates 51b of the second bracket 51B, and the perimeter of the strut 11 is surrounded by the main plates 51a and the side plates 51b of the first and second brackets 51A, 51B. The brims 51c of the first and second brackets 51A, 51B are overlapped with each other, and two bolts 53 are screwed and fastened to the screw holes 51h of the brims 51c of the first bracket 51A through the perforated holes 51g of the brims 51c of the second bracket 51B, so that the first and second brackets 51A, 51B are connected to the strut 11, and the arms 12, 13 are coupled with the first and second brackets 51A, 51B disposed therebetween.

Thereby, the vertical cross-piece 14 is supported at an angle on the upper end portion of the strut 11, thus forming a truss made up of the strut 11, the two arms 12, 13, and the vertical cross-piece 14.

Thereafter, according to the same procedure as that described with reference to FIGS. 23 to 36, the horizontal cross-pieces 15 are placed and fixed onto the vertical cross-pieces 14, and the solar cell modules 16 are disposed, spanning between the horizontal cross-pieces 15, and, thereby, a solar photovoltaic system is constructed.

In the third embodiment, a structural object mount can be roughly assembled by performing the operation of previously connecting end portions of the arms 12, 13 toward opposite ends of the vertical cross-piece 14, connecting the central portion of the vertical cross-piece 14 to the strut 11, thereafter causing the other end portions of the arms 12, 13 to approach toward the strut 11, and coupling the other end portions of the arms 12, 13 to each other with the arm bracket 51 disposed therebetween, and therefore the operation of installing the structural object mount can be performed easily. Further, since the strut 11, the two arms 12, 13, and the vertical cross-piece 14 construct a truss, the structural object mount has an increased strength.

While preferred embodiments of the present invention have been described above with reference to the accompanying drawings, it should be appreciated that the present invention is not limited to the embodiments shown above. It will be apparent for a person skilled in the art that various modifications and variations may be made within the scope of the invention as defined in the appended claims, and those modifications and variations should be understood to be included within the technical scope of the present invention.

### Industrial Applicability

The present invention is useful for supporting a structural object such as a solar cell module and a reflector panel used for solar thermal power generation.

### Description of Reference Numerals

- 11: Strut
- 12, 13: Arm
- 14: Vertical cross-piece
- 15: Horizontal cross-piece
- 16: Solar cell module
- 17: Guiding support member
- 17d: Fitting groove
- 17e: Hooking portion
- 17f: Stopper
- 18: Solar cell panel
- 19: Tension bar
- 19c: Fitting portion
- 19d: Abutting portion
- 21, 43: Cross-piece bracket
- 22, 44, 51: Arm bracket
- 23, 26, 29: Bolt
- 25: Pipe
- 27: Nut
- 28: Opening portion
- 31, 33: Mounting fitting
- 51A: First bracket
- 51B: Second bracket

## Claims

1. A structural object mount that supports a structural object, comprising:
a cross-piece for mounting a structural object;
a strut that is connected to the cross-piece and supports the cross-piece;
two arms whose respective one end portions are connected to the cross-piece; and
an arm bracket that couples another end portions of the two arms to each other,
wherein the structural object mount has a structure in which a location of connection between the cross-piece and the strut is between locations of connection between the cross-piece and the two arms, and the arm bracket surrounds the perimeter of the strut.

2. A structural object mount that supports a structural object, comprising:
a strut; and
a triangular structural unit in which end portions of two arms are respectively connected to two locations of a cross-piece for mounting a structural object and another end portions of the arms are coupled to each other,
wherein an opening portion that allows passage of the strut is formed between the other end portions of the arms, and
the strut is passed through the opening portion, and an upper end portion of the strut is coupled to a location approximately midway between the two locations of the cross-piece.

3. The structural object mount according to claim 2,
wherein a play is provided between the opening portion and the strut.

4. The structural object mount according to claim 2 or 3,
wherein an inner face of the opening portion and an outer face of the strut are engaged with each other to prevent rotation of the triangular structural unit.

5. The structural object mount according to any one of claims 2 to 4,
wherein an arm bracket is provided that is interposed between the other end portions of the arms and connects the other end portions of the arms to each other, and
the opening portion is formed in the arm bracket.

6. The structural object mount according to claim 1 or 5,
wherein the arm bracket is fastened to a body portion of the strut.

7. The structural object mount according to any one of claims 2 to 5,
wherein the arm bracket is disposed so as to sandwich the strut, an inner face of the arm bracket serves as the opening portion, the arm bracket and each of the arms are connected by fastening, and the play between the opening portion and the strut is adjusted by changing the strength of the fastening.

8. The structural object mount according to any one of claims 1 to 7,
wherein an upper end portion of the strut is connected to the cross-piece at the center of the structural object mounted onto the cross-piece.

9. The structural object mount according to any one of claims 1 to 8,
wherein a vertically extending elongated hole is formed in an upper end portion of the strut, and the cross-piece is fastened through the elongated hole located at the upper end portion of the strut.

10. The structural object mount according to any one of claims 1 to 9,
wherein a horizontally extending elongated hole is formed in each of two locations of the cross-piece where the end portions of the arms are connected and a location approximately midway of the cross-piece where an upper end portion of the strut is coupled, and the end portions of the arms and the upper end portion of the strut are fastened or coupled through the elongated holes of the cross-piece.

11. The structural object mount according to any one of claims 1 to 10,
wherein the structural object is a solar cell module.

12. A method for installing the structural object mount according to claim 1, comprising the steps of:
providing the strut in a protruding manner;
connecting end portions of the arms to two locations of the cross-piece, and dividing the arm bracket so as to be connected to another end portions of the arms;
placing the cross-piece on an upper end portion of the strut; and
connecting, to the strut, the arm bracket connected to the other end portions of the arms to surround the perimeter of the strut by the arm bracket, and coupling the other end portions of the arms to each other with the arm bracket disposed therebetween.

13. A method for installing the structural object mount according to claim 2, comprising the steps of:
providing the strut in a protruding manner;
connecting end portions of the arms to two locations of the cross-piece and coupling another end portions of the arms to each other to form a triangular structural unit including the arms and the cross-piece; and
passing the strut through an opening portion formed between the other end portions of the arms of the structural unit to connect the upper end portion of the strut to a location midway between the two locations of the cross-piece.

14. A method for installing the structural object mount according to claim 13, comprising:
arranging a plurality of the struts and providing the struts on the ground in a protruding manner;
loading a plurality of the structural units onto a truck; and,
during a process in which the truck is caused to run, is stopped at the positions of the struts successively, and the structural units are unloaded from the truck, passing the strut through an opening portion formed between the end portions of the arms of the structural unit, moving the upper end portion of the strut to the cross-piece to connect the upper end portion of the strut to the cross-piece.

15. A solar photovoltaic system using the structural object mount according to claim 1 or 2,
wherein a plurality of sets of structural object mounts each including the strut, the cross-piece, and the two arms are provided, and
the cross-pieces of the structural object mounts are arranged side by side with an interval therebetween, assuming that the cross-pieces serve as vertical cross-pieces, a plurality of horizontal cross-pieces orthogonal to the vertical cross-pieces are arranged parallel on the vertical cross-pieces, and a plurality of solar cell modules are supported between the horizontal cross-pieces, spanning therebetween.
